# EUROPEAN PATENT APPLICATION

(11) **EP 4 418 036 A1**
(43) Date of publication of application: **21.08.2024**
(21) Application number: 22881111.3
(22) Date of filing: 14.10.2022
(51) Int. Cl.: G02C 7/10, G02F 1/15, G02F 1/155

(54) **ELECTRONIC DIMMING LENS, ELECTRONIC DIMMING GLASSES, MANUFACTURING METHOD FOR ELECTRONIC DIMMING LENS, AND MANUFACTURING METHOD FOR ELECTRONIC DIMMING GLASSES**

(30) Priority: 14.10.2021 JP 2021169006
(71) Applicant: Hoya Lens Thailand Ltd., Pathumthani 12130 (TH)
(72) Inventor: MIYAZAKI Shigeki, Tokyo 160-8347 (JP)
(74) Representative: Hoffmann Eitle
(86) International application number: PCT/JP2022/038373
(87) International publication number: WO 2023/063416

(57) **Abstract**

There is provided an electronic dimming lens (11, 40, 50) acquired by combining an electronic element (21, 52) for dimming and a lens (20, 51), the electronic dimming lens including: holes (32, 34, 43, 44, 55, 56) that open on an outer face of the electronic dimming lens and are connected to electrodes (22, 23, 41, 42, 53, 54) for a positive electrode and a negative electrode in the electronic element; and terminal members (24, 25, 45, 46, 57, 58) that are molded to match a shape of the holes and are inserted into the holes, in which the terminal member is electrically connected to the electrodes inside of the hole and has one end part exposed to an opening of the hole. In accordance with this, reliability, durability, and producibility of terminals connected to electrodes of the electronic element for dimming can be configured to be superior.

## Description

### [Technical Field]

The present invention relates to an electronic dimming lens, electronic dimming glasses, a manufacturing method for an electronic dimming lens, and a manufacturing method for electronic dimming glasses.

### [Background Art]

An electronic dimming lens that includes an electronic element stacked inside or on the surface of a lens and acquires a dimming effect by changing optical characteristics (optical transmittance, a color, and the like) through supply of electric energy to the electronic element is known. By embedding such an electronic dimming lens into a glasses frame, electronic dimming glasses are configured.

As one example of an electronic element for dimming, an electrochromic element (EC element) is known (for example, PTL 1). The electrochromic element can be formed into a curved shape corresponding to the spherical lens surface, and is suitable as an electronic element for electronic dimming glasses.

In PTL 2, a configuration in which an electrode pattern (a positive electrode and a negative electrode) of an electronic element in an electronic dimming lens is exposed to a lens outer circumferential part, and an electric connection means installed on the inner side of a rim of a glasses frame is connected to the electrode pattern is described.

As a structure for power feeding having a low structural restriction in an electronic element or a glasses frame, a structure in which a hole that opens on a lens outer face and reaches the electrode of the electronic element is formed, and a conductive silver paste is injected into the inside of this hole is known. By hardening the silver paster after injection, a terminal part of which a part is exposed to an outer face of an electronic dimming lens is formed, and a conductive member for power feeding is connected to the terminal part from the outside. This configuration has a high degree of freedom in that the position of the terminal part can be chosen later in accordance with a position at which the hole is formed and has an advantage that it can easily respond to electronic elements and glasses frames of various forms.

In addition, when an electronic dimming lens is mounted in electronic dimming glasses, a structure in which the electronic dimming lens and a conductive member are pinched from both sides using rims of a glasses frame, and contact between a terminal part of the electronic dimming lens side and the conductive member is maintained is known.

### [Citation List]

### [Patent Literature]

[PTL 1] Japanese Patent No. 6624206
[PTL 2] Japanese Patent No. 5511997

### [Summary of Invention]

### [Technical Problem]

In a conventional electronic dimming lens, there are several problems in the terminal part formed using the silver paste described above. First, silver particles included in the silver paste are susceptible to oxidation, and particularly, a place exposed to an opening part of the hole is susceptible to degradation. In addition, at the time of injection into a hole, movement of the silver paste according to diffusion and vibrations may easily occur, and it is difficult to form a terminal part having a stable shape. From such reasons, it is difficult for a terminal part using a silver paste as its material to obtain long-term reliability of conduction performance.

In addition, an operation of injecting a silver paste having fluidity into a fine hole needs to be carefully performed while preventing scattering and the like of the silver paste in the vicinity, and in a case in which the silver paste is scattered on a lens, it needs to be removed, which takes efforts. Furthermore, when the shape of an exposed part of the silver paste that has been injected into the hole becomes rough, defective contact with the conductive member may easily occur, and thus processing of forming a flat shape using polishing or the like is necessary. For such reasons, an operation of forming a terminal part using a silver paste requires efforts and has a high degree of difficulty.

Particularly, in a case in which a large quantity of electronic dimming lenses is produced, the difficulties in using a silver paste as described above become remarkable, and a new terminal structure for electrode connection that is appropriate for mass production of electronic dimming lenses has been requested.

In addition, in an application to electronic dimming glasses, in the case of a structure in which a terminal part of an electronic dimming lens and a conductive member are pinched from both sides using rims of a glasses frame, an operation of mounting the electronic dimming lens and the conductive member in the glasses frame while an operation of positioning them is performed is necessary, and thus there is a problem that it is difficult to perform the operations.

In order to solve the problems described above, an object of the present invention is to provide an electronic dimming lens, electronic dimming glasses, a manufacturing method for an electronic dimming lens, and a manufacturing method for electronic dimming glasses having superior reliability, durability, and producibility of terminals connected to electrodes of an electronic element for dimming.

### [Solution to Problem]

One aspect of the present invention is an electronic dimming lens acquired by combining an electronic element for dimming and a lens, the electronic dimming lens including: holes that open on an outer face of the electronic dimming lens and are connected to electrodes for a positive electrode and a negative electrode in the electronic element; and terminal members that are molded to match a shape of the holes and are inserted into the holes, in which the terminal members are electrically connected to the electrodes inside of the holes and have one end parts exposed through openings of the holes.

It is preferable that the terminal members be disposed inside of the holes in a press-fitted state.

A configuration in which the electrodes are positioned on bottom faces of the holes, and end parts of the terminal members that are on a side opposite to the one end parts are brought into contact with the electrodes can be used. Alternatively, a configuration in which the holes pass through the electrodes, and outer circumferential faces of the terminal members are brought into contact with the electrodes can be used as well. Alternatively, a configuration in which the holes overlaps concave parts disposed in outer frame parts of the electrodes, and entering parts of the terminal members for the concave parts are brought into contact with the electrodes can be used as well.

It is preferable that the terminal members have a structure in which outer faces of a core portions made of nickel are covered with gold plating.

The holes into which the terminal members are inserted open on at least one of a front face and a rear face of the electronic dimming lens. Alternatively, the holes into which the terminal members are inserted open on an outer circumferential face of the electronic dimming lens.

It is preferable that a protrusion part that protrudes from an outer circumferential face of the lens to an outer side and forming the holes, a conductive member for power feeding that is disposed to overlap the protrusion part and is brought into contact with the terminal members, and a holding member that is mounted in the protrusion part from above the conductive member and holds the conductive member and the terminal members with respect to the protrusion part be included.

It is preferable that the protrusion part have engagement portions on one pair of side faces adjacent to a hole formation face where the holes open, and the holding member have a shape surrounding the hole formation face of the protrusion part and the one pair of side faces and be engaged with the engagement portions.

By mounting an electronic dimming lens in a glasses frame covering a protrusion part, a conductive member, and a holding member, electronic dimming glasses can be configured. In these electronic dimming glasses, the conductive member is connected to a dimming control unit built into the glasses frame, and power is fed from the dimming control unit to the electronic element through the conductive member and the terminal member.

In addition, by mounting an electronic dimming lens in which holes into which terminal members are inserted open on an outer circumferential face in a glasses frame, electronic dimming glasses can be configured. This glasses frame supports a conductive member connected to a dimming control unit, and a connector part of the conductive member is exposed on an inner circumferential face of a ring-shaped part holding the electronic dimming lens. Then, in a state in which the electronic dimming lens is held in the ring-shaped part, the terminal members are brought into contact with the connector part, and power is fed from the dimming control unit to the electronic element through the conductive member and the terminal members.

One aspect of the present invention is a manufacturing method for an electronic dimming lens acquired by combining an electronic element for dimming and a lens, the manufacturing method including: forming holes that open on an outer face of the electronic dimming lens and are connected to electrodes for a positive electrode and a negative electrode in the electronic element; molding terminal members with shapes matching shapes of the holes; electrically connecting the molded terminal members to the electrodes by inserting the terminal members into the holes from an opening side and exposing one end parts of the inserted terminal members through openings of the holes.

It is preferable that insertion of the terminal members into the holes be performed by press-fitting.

As one form of a manufacturing method for an electronic dimming lens, the holes is formed in a protrusion part protruding from an outer circumferential face of the lens to an outer side, after the terminal members are inserted into the holes, a conductive member is brought into contact with the one end parts of the terminal members positioned inside of the holes by overlapping the conductive member for power feeding with the protrusion part, and the conductive member and the terminal members are held with respect to the protrusion part by mounting the holding member in the protrusion part from above the conductive member.

There is provided a manufacturing method for electronic dimming glasses having an electronic dimming lens manufactured by a manufacturing method according to this form includes mounting the electronic dimming lens in a state in which the terminal members, the conductive member, and the holding member are assembled in a glasses frame, and connecting the conductive member to a dimming control unit disposed inside of the glasses frame.

As another form of the manufacturing method for an electronic dimming lens, the holes are formed to open on an outer circumferential face of the lens, the terminal members are inserted into the holes, and the one end parts of the terminal members are exposed on an outer circumferential side of the lens.

There is provided a manufacturing method for electronic dimming glasses having an electronic dimming lens manufactured by the manufacturing method according to this form includes disposing a conductive member for power feeding along an inner circumferential face of a ring-shaped part of a glasses frame holding the electronic dimming lens, and bringing the conductive member into contact with the one end parts of the terminal members positioned inside of the holes by mounting the electronic dimming lens in the glasses frame.

### [Advantageous Effects of Invention]

According to the present invention, an electronic dimming lens, electronic dimming glasses, and manufacturing methods thereof having superior reliability, durability, and producibility of terminals connected to electrodes of an electronic element for dimming can be acquired.

### [Brief Description of Drawings]

[Fig. 1]

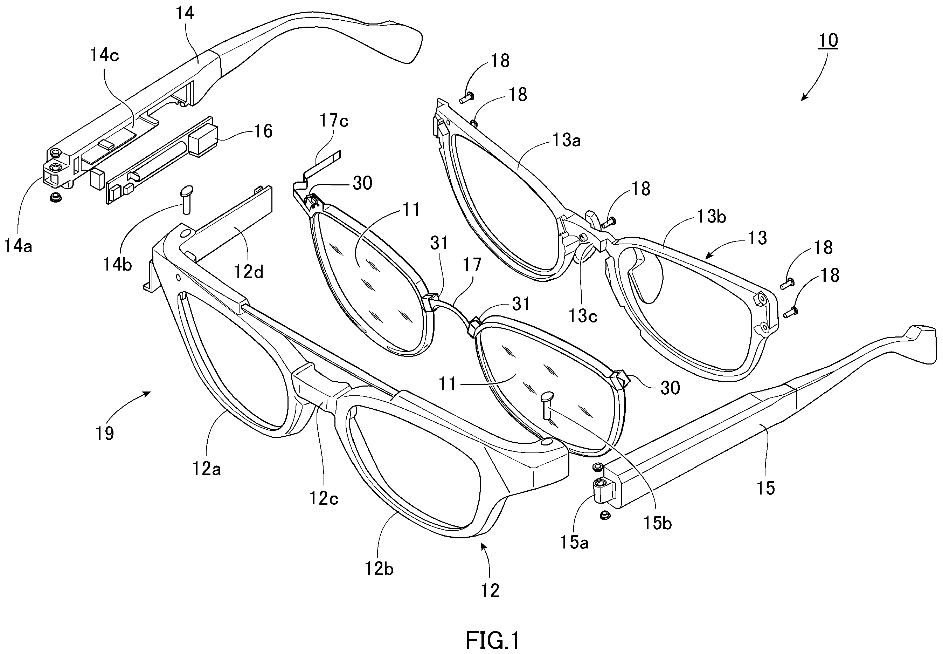

   Fig. 1 is a perspective view of a state in which electronic dimming glasses are decomposed.
[Fig. 2]

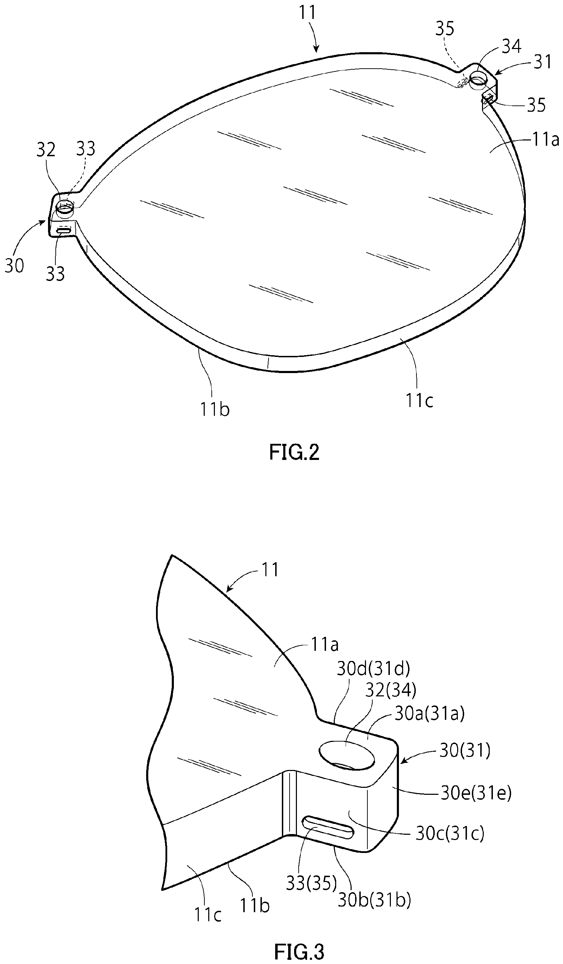

   Fig. 2 is a perspective view of an electronic dimming lens configuring electronic dimming glasses.
[Fig. 3]
   Fig. 3 is a perspective view illustrating a protrusion part provided in an electronic dimming lens.
[Fig. 4]

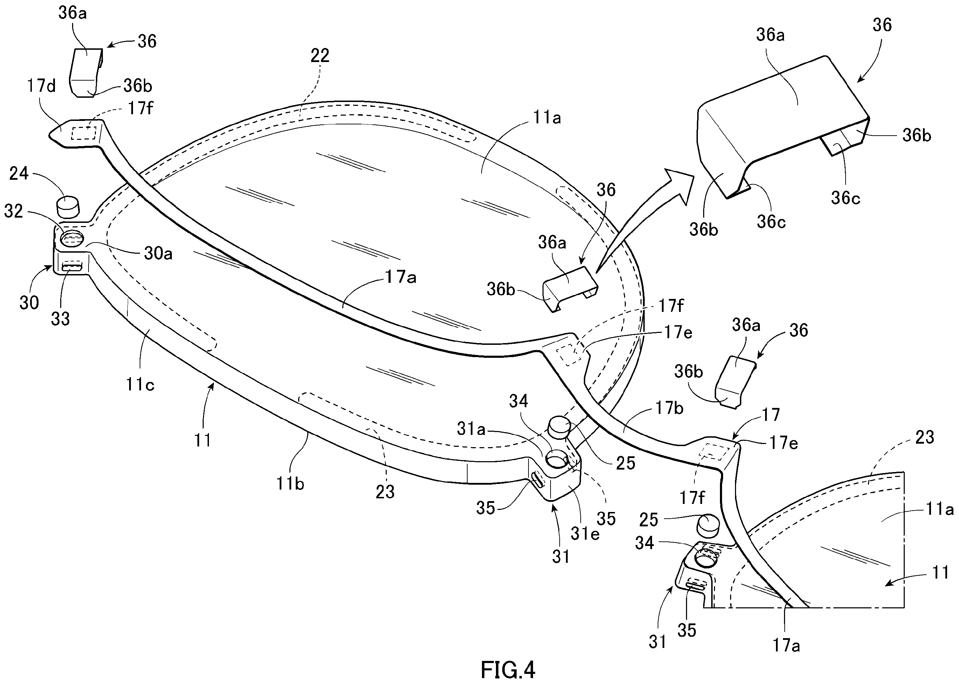

   Fig. 4 is a diagram illustrating a process of mounting a terminal member and a conductive member in an electronic dimming lens.
[Fig. 5]

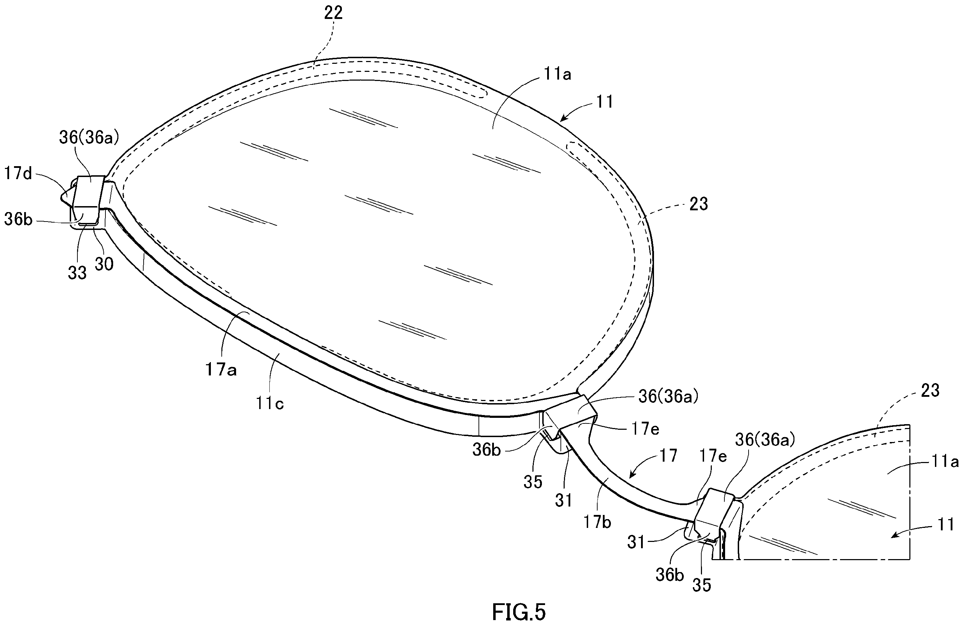

   Fig. 5 is a diagram illustrating a state in which the mounting of the terminal member and the conductive member in the electronic dimming lens has been completed.
[Fig. 6]

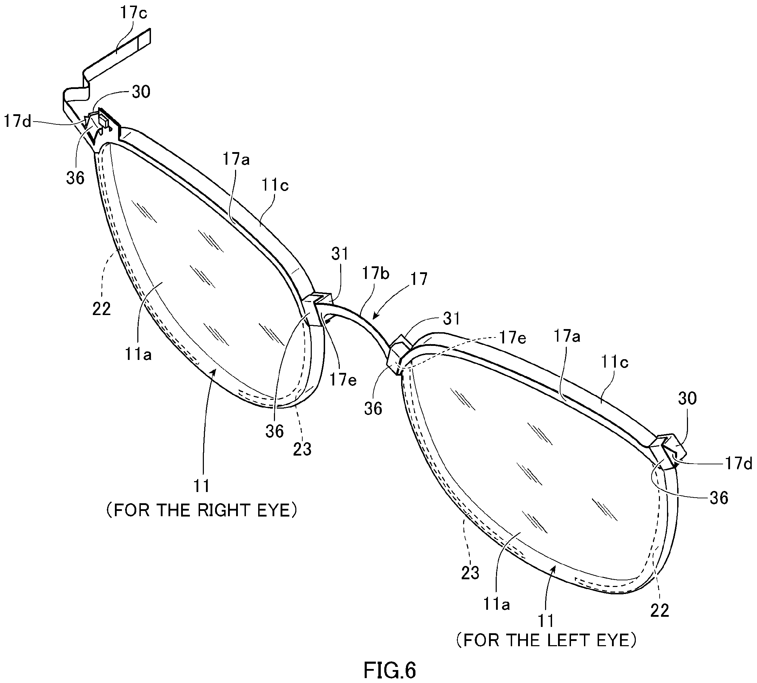

   Fig. 6 is a diagram illustrating a lens assembly in which mounting of a terminal member and a conductive member has been completed.
[Fig. 7]

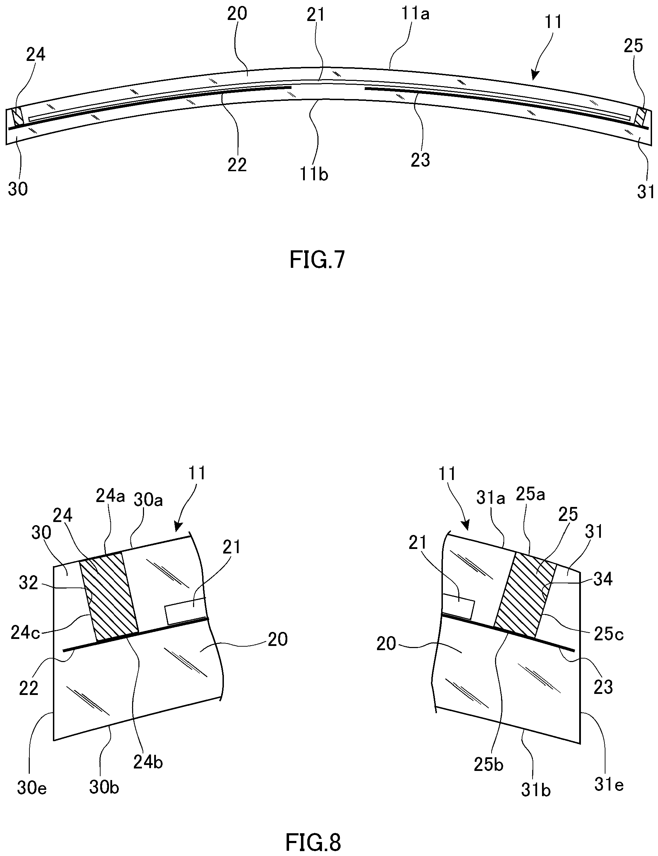

   Fig. 7 is a cross-sectional view in a thickness direction of an electronic dimming lens that illustrates a cross-sectional structure of the electronic dimming lens at a position including a terminal member.
[Fig. 8]
   Fig. 8 is a cross-sectional view in a thickness direction of an electronic dimming lens that illustrates a first form of an attachment structure of a terminal member in the electronic dimming lens.
[Fig. 9]

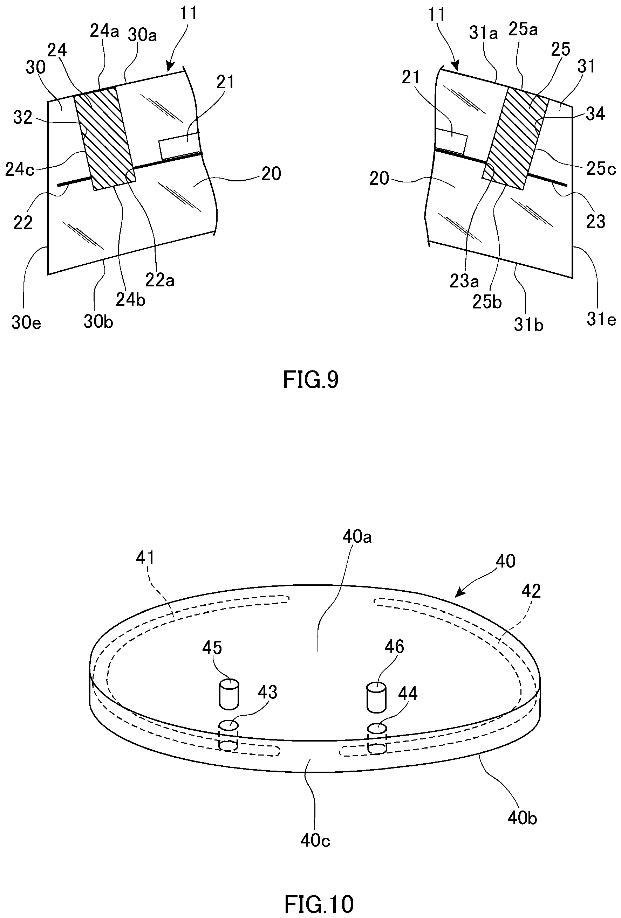

   Fig. 9 is a cross-sectional view in a thickness direction of an electronic dimming lens that illustrates a second form of an attachment structure of a terminal member in the electronic dimming lens.
[Fig. 10]
   Fig. 10 is a perspective view illustrating an electronic dimming lens of a modified example in which an attachment structure of a terminal member has been changed.
[Fig. 11]

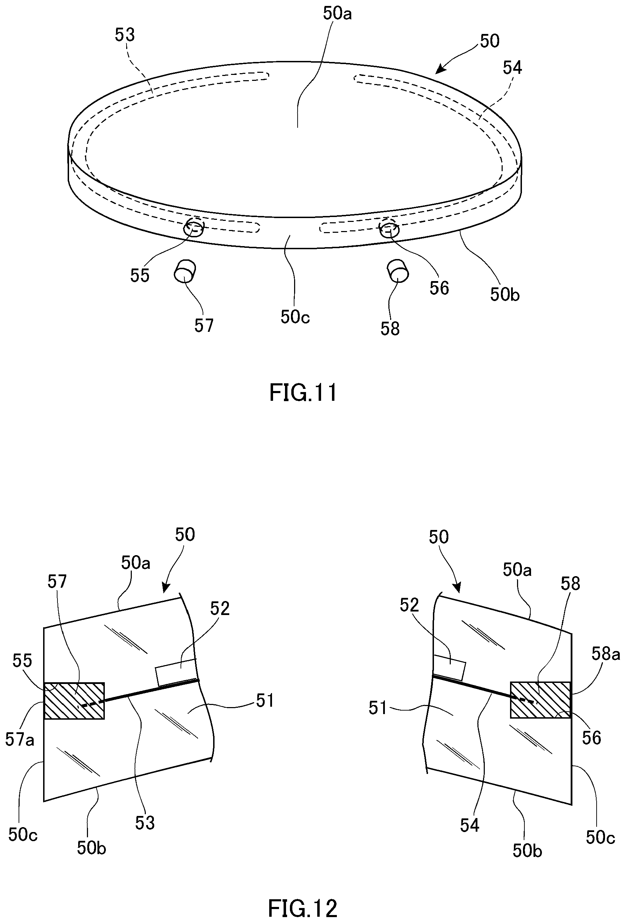

   Fig. 11 is a perspective view illustrating an electronic dimming lens of another modified example in which an attachment structure of a terminal member has been changed.
[Fig. 12]
   Fig. 12 is a cross-sectional view in a thickness direction of an electronic dimming lens illustrating a terminal member and a nearby structure thereof in the electronic dimming lens illustrated in Fig. 11.
[Fig. 13]

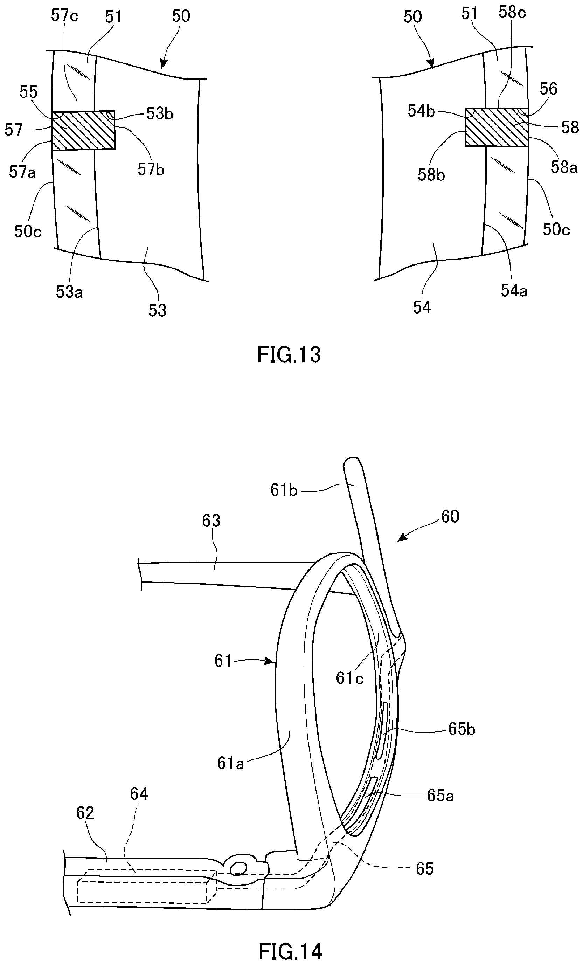

   Fig. 13 is a cross-sectional view in a direction intersecting with a thickness direction of an electronic dimming lens that illustrates a terminal member and a nearby structure thereof in the electronic dimming lens illustrated in Fig. 11.
[Fig. 14]
   Fig. 14 is a perspective view of a glasses frame in which the electronic dimming lens illustrated in Fig. 11 is mounted.

### [Description of Embodiments]

Fig. 1 illustrates a state in which electronic dimming glasses 10 according to this embodiment are decomposed into main parts. The electronic dimming glasses 10 are configured by assembling one pair of left and right (left-eye and righteye) electronic dimming lenses 11 into a glasses frame 19.

As illustrated in Figs. 2 and 7, the electronic dimming lens 11 has a convex face 11a of a front side, a concave face 11b of a rear side, and an outer circumferential face 11c surrounding peripheral edges of the convex face 11a and the concave face 11b. The electronic dimming lens 11 is configured by combining a lens 20 that is an optical element and an electrochromic element (EC element) 21 that is an electronic element for dimming, and details thereof will be described below.

The glasses frame 19 of the electronic dimming glasses 10 includes a front rim part 12 and a rear rim part 13 divided in a forward/backward direction. The front rim part 12 is positioned on the front side, the rear rim part 13 is positioned on the rear side, and peripheral edge portions of one pair of left and right electronic dimming lenses 11 are held between the front rim part 12 and the rear rim part 13 in the front/backward direction. The front rim part 12 and the rear rim part 13 are fixed to each other using a plurality of screws 18.

The front rim part 12 has one pair of ring-shaped parts 12a and 12b holding the peripheral edge portions of the one pair of left and right electronic dimming lenses 11 and a bridge 12c connecting the one pair of ring-shaped parts 12a and 12b. Similarly, the rear rim part 13 also has one pair of ring-shaped parts 13a and 13b holding the one pair of left and right electronic dimming lenses 11 and a bridge 13c connecting the one pair of ring-shaped parts 13a and 13b.

In addition, the glasses frame 19 of the electronic dimming glasses 10 has a right temple 14 connected to the right side of the ring-shaped part 12a of the front rim part 12 and a left temple 15 connected to the left side of the ring-shaped part 12b of the front rim part 12. A hinge part 14a of the right temple 14 is connected such that it can rotate with respect to the front rim part 12 with a hinge pin 14b as its center. A hinge part 15a of the left temple 15 is connected such that it can rotate with respect to the front rim part 12 with a hinge pin 15b as its center. A lid part 12d that overlaps a part of the right temple 14 is disposed in the front rim part 12.

A housing space 14c covered with the lid part 12d is disposed in the right temple 14. Inside of the housing space 14c, a dimming control unit 16 that is a dimming control part is housed. The dimming control unit 16 has a power supply (a battery) and a control unit and controls power supply (application of a voltage) to the electrochromic element 21 (Fig. 7) of each electronic dimming lens 11.

A conductive member 17 is disposed inside of the electronic dimming glasses 10. The conductive member 17 is disposed to overlap peripheral edge portions of the convex faces 11a of the left and right electronic dimming lenses 11 (see Figs. 5 and 6) and electrically connects a first terminal member 24 and a second terminal member 25 (details thereof will be described below) attached to the electronic dimming lenses 11 and the power supply of the dimming control unit 16. The conductive member 17 is a band-shaped member having flexibility and has a structure in which an internal pattern wiring is covered with an outer skin (plastic or the like having flexibility) formed from an insulating material. More specifically, the conductive member 17 is configured using a flexible printed board or the like.

At positions of the upper edge side of one pair of the left and right ring-shaped parts 12a and 12b in the front rim part 12, the bridge 12c, the right temple 14 (the hinge part 14a), and the left temple 15 (the hinge part 15a) are connected. In correspondence with such a frame shape, the conductive member 17 is formed to have a slim and elongated shape extending in a horizontal direction mostly along the upper edge portion of the front rim part 12. In more detail, as illustrated in Fig. 6, in the conductive member 17, one pair of left and right arc-shaped parts 17a having a curved shape following near the upper edges of the one pair of ring-shaped parts 12a and 12b are connected using a connection part 17b having a shape along the bridge 12c.

In addition, the conductive member 17 has an extension part 17c extending from the arc-shaped part 17a of the right side (see Figs. 1 and 6). The extension part 17c is disposed inside of the housing space 14c of the right temple 14 and is connected to the dimming control unit 16.

In the conductive member 17, one first connector part 17d and one second connector part 17e are disposed near both ends of each of the arc-shaped parts 17a. In more detail, one first connector part 17d is disposed near a boundary between the arc-shaped part 17a of one side (a side overlapping the electronic dimming lens 11 for the right eye) and the extension part 17c, and one first connector part 17d is disposed near a tip end of the conductive member 17 positioned on a side opposite to the extension part 17c. In addition, one second connector part 17e is disposed near a boundary between the arc-shaped part 17a of one side (the side overlapping the electronic dimming lens 11 for the right eye) and the connection part 17b, and one second connector part 17e is disposed near a boundary between the arc-shaped part 17a of the other side (a side overlapping the electronic dimming lens 11 for the left eye) and the connection part 17b.

In each of the connector parts 17d and 17e, on a rear face side facing the convex face 11a of the electronic dimming lens 11, a conductive part 17f acquired by exposing a part of a wiring to be able to be conductive with the outside is disposed (see Fig. 4). In the conductive member 17, a portion of the extension part 17c that is connected to the dimming control unit 16 and portions of the connector parts 17d and 17e other than the conductive part 17f are covered with an outer skin having an insulating property.

On the outer face of the right temple 14, an operation unit (not illustrated) that can be operated by a user of the electronic dimming glasses 10 is disposed. When the operation unit is operated, a signal is input to the dimming control unit 16 and, in accordance with control of the dimming control unit 16, conduction control for the electrochromic element 21 of the electronic dimming lens 11 is performed through the conductive member 17, whereby a dimming effect in the electronic dimming lens 11 is acquired. The dimming control unit 16 may change a dimming effect (optical transmittance) of the electronic dimming lens 11 in a plurality of levels in accordance with an operation on the operation unit.

As illustrated in Fig. 7 as a cross-sectional view, the electronic dimming lens 11 is configured by arranging (stacking) the electrochromic element 21 that is an electronic element for dimming inside of the lens 20 that is an optical element made of a resin. Although omitted in Fig. 7, on the convex face 11a and the like, a coat layer having a predetermined function (a reflection prevention effect, transmission control of an ultraviolet ray and an infrared ray, a lens protection effect, and the like) may be formed.

Although specific illustration is omitted, the electrochromic element 21 is configured by stacking a first electrode layer, an electrochromic layer (a dimming layer), and a second electrode layer on a substrate of a resin or the like. The electrochromic layer contains an electrochromic material that reversibly changes the optical properties through a redox reaction caused by the application of voltage. The first electrode layer and the second electrode layer are positioned with the electrochromic layer interposed therebetween, and the first electrode layer configures a positive electrode, and the second electrode layer configures a negative electrode.

The electrochromic layer of the electrochromic element 21 is in a transparent (highest transmittance of visible light) state in the normal state when no voltage is applied, and is colored in a predetermined color corresponding to the electrochromic material by the application of voltage, to reduce the light transmittance.

The first electrode layer and the second electrode layer of the electrochromic element 21 are each a transparent electrode layer (a transparent conductive film) made of a transparent and conductive material. As illustrated in Figs. 4 and 7, in the peripheral edge portion of the electronic dimming lens 11, a bus electrode 22 made of metal that is stacked on the first electrode layer and a bus electrode 23 made of metal that is stacked on the second electrode layer are disposed. The bus electrode 22 configures an electrode used for a positive electrode together with the first electrode layer, and the bus electrode 23 configures an electrode used for a negative electrode together with the second electrode layer. The bus electrodes 22 and 23 have a flat structure overlapping the first electrode layer and the second electrode layer of the electrochromic element 21 and, when seen from the front side and the rear side, have a band shape curved along near the peripheral edge of the electronic dimming lens 11.

Generally, a transparent electrode has higher resistivity than a metal electrode. For this reason, when the electrochromic element 21 is driven, in the first electrode layer and the second electrode layer that are transparent electrode layers, a drive voltage is lowered in a portion far from a power feeding place, and there is concern that unevenness occurs in color change of the electrochromic layer. In order to prevent such a defect, the bus electrode 22 and the bus electrode 23 that are metal electrodes are disposed to be stacked on the first electrode layer and the second electrode layer, whereby an electric resistance value is lowered.

A first terminal member 24 that is connected to the bus electrode 22 and is exposed to a front face (the convex face 11a) side of the electronic dimming lens 11 and a second terminal member 25 that is connected to the bus electrode 23 and is exposed to the front face (the convex face 11a) side of the electronic dimming lens 11 are attached to each electronic dimming lens 11. The first terminal member 24 configures a terminal part used for a positive electrode, and the second terminal member 25 configures a terminal part used for a negative electrode. By bringing the first terminal member 24 into contact with the conductive part 17f of the first connector part 17d of the conductive member 17 and bringing the second terminal member 25 into contact with the conductive part 17f of the second connector part 17e of the conductive member 17, a path for power feeding reaching each electronic dimming lens 11 from the dimming control unit 16 through the conductive member 17 is formed. The configuration of the electronic dimming lens 11 relating to the first terminal member 24 and the second terminal member 25 will be described below.

As illustrated in Fig. 2, each electronic dimming lens 11 includes a first protrusion part 30 and a second protrusion part 31 protruding from the outer circumferential face 11c to the outer side (in an outer diameter direction). The first protrusion part 30 is disposed at a position overlapping the first connector part 17d of the conductive member 17, and the second protrusion part 31 is disposed at a position overlapping the second connector part 17e of the conductive member 17.

In more detail, in the electronic dimming lens 11 for the right eye, the first protrusion part 30 is disposed near a place at which the ring-shaped part 12a of the front rim part 12 is connected to the right temple 14, and the second protrusion part 31 is disposed near a place at which the ring-shaped part 12a and the bridge 12c are connected. In the electronic dimming lens 11 for the left eye, the first protrusion part 30 is disposed near a place at which the ring-shaped part 12b of the front rim part 12 is connected to the left temple 15, and the second protrusion part 31 is disposed near a place at which the ring-shaped part 12b and the bridge 12c are connected. In other words, in the electronic dimming lens 11 for the right eye and the electronic dimming lens 11 for the left eye, the first protrusion part 30 and the second protrusion part 31 are disposed approximately symmetrical in a horizontal direction.

As illustrated in Figs. 4 and 7, in each electronic dimming lens 11, the bus electrode 22 extends to the position of the first protrusion part 30, and the bus electrode 23 extends to the position of the second protrusion part 31. The bus electrodes 22 and 23 have portions that do not overlap the electrochromic element 21 and are present alone inside of the protrusion parts 30 and 31, and these portions of the bus electrodes 22 and 23 are connection targets of the terminal members 24 and 25.

As illustrated in Fig. 3, the first protrusion part 30 has a front face part 30a, a rear face part 30b, a side face part 30c, a side face part 30d, and an end face part 30e. The front face part 30a is a face continuous to the convex face 11a of the electronic dimming lens 11 and configures a front face of the electronic dimming lens 11 together with the convex face 11a. The rear face part 30b is a face continuous to the concave face 11b and configures a rear face of the electronic dimming lens 11 together with the concave face 11b. The side face part 30c and the side face part 30d are continuous to the outer circumferential face 11c and are approximately-parallel faces connecting the front face part 30a and the rear face part 30b by extending in a forward/backward direction. The end face part 30e is positioned at a tip end of the first protrusion part 30 and is a face that smoothly connects the side face part 30c and the side face part 30d. The first protrusion part 30 is a box-shaped protrusion surrounded by such faces 30a to 30e.

A direction joining the front face part 30a and the rear face part 30b is set as a thickness direction of the first protrusion part 30. The thickness direction of the first protrusion part 30 has the same meaning as a thickness direction of the electronic dimming lens 11. A direction joining the side face part 30c and the side face part 30d is set as a horizontal width direction of the first protrusion part 30. In addition, a direction joining a base end portion of the first protrusion part 30 connected to the outer circumferential face 11c and the end face part 30e will be set as a vertical width direction of the first protrusion part 30.

In the first protrusion part 30, a housing hole 32 for attaching the first terminal member 24 is formed. The housing hole 32 is an approximately circular shaped hole that opens on the front face part 30a. In other words, the front face part 30a is a hole forming face on which the housing hole 32 opens. The housing hole 32 is formed to have a predetermined depth in the thickness direction of the first protrusion part 30. The predetermined depth is a depth at least up to reach of the bus electrode 22. In more detail, in an attachment structure of the first terminal member 24 through the housing hole 32, a first form illustrated in Fig. 8 and a second form illustrated in Fig. 9 can be selected.

As illustrated in Fig. 8, in the first form, the bus electrode 22 having a flat shape is configured to be positioned in a bottom part of the housing hole 32. As illustrated in Fig. 9, in the second form, the housing hole 32 passes through the bus electrode 22 having a flat shape in the thickness direction, and a bottom face of the housing hole 32 is positioned on the rear face part 30b side of the bus electrode 22. In addition, in the second form, the housing hole 32 is set not to pass through up to the rear face part 30b. In other words, in any one of the first form and the second form, the housing hole 32 is configured as a bottomed hole through which only the front face part 30a side is opened, and the bottom part is closed.

In the first form illustrated in Fig. 8, a front face of the bus electrode 22 is exposed to the bottom part of the housing hole 32. In other words, the bottom face of the housing hole 32 is configured by the bus electrode 22. In the second form illustrated in Fig. 9, an inner edge part 22a of the through hole of the bus electrode 22 is exposed to the inner circumferential face of the housing hole 32 in a ring shape.

In the first protrusion part 30, one pair of holding grooves 33 that are engagement parts are additionally formed. One holding groove 33 is formed in each of the side face part 30c and the side face part 30d and is a long groove extending in the vertical width direction of the first protrusion part 30. Longitudinal directions of the one pair of holding grooves 33 are approximately parallel to each other.

The second protrusion part 31 has a configuration similar to the first protrusion part 30. Since the first protrusion part 30 and the second protrusion part 31 have externals shapes and the like that are similar to each other, similar to the first protrusion part 30 described above, a detailed structure of the second protrusion part 31 will be described with reference to Fig. 3. Reference signs represented inside of parenthesis in Fig. 3 are those of a case in which the structure is applied to the second protrusion part 31.

The second protrusion part 31 has a front face part 31a, a rear face part 31b, a side face part 31c, a side face part 31d, and an end face part 31e. The front face part 31a is a face continuous to the convex face 11a of the electronic dimming lens 11, and the rear face part 31b is a face continuous to the concave face 11b. The side face part 31c and the side face part 31d are continuous to the outer circumferential face 11c and are approximately-parallel faces connecting the front face part 31a and the rear face part 31b by extending in a forward/backward direction. The end face part 31e is positioned at a tip end of the second protrusion part 31 and is a face that connects the side face part 31c and the side face part 31d. The second protrusion part 31 is a box-shaped protrusion surrounded by such faces 31a to 31e.

A direction joining the front face part 31a and the rear face part 31b is set as a thickness direction of the second protrusion part 31. The thickness direction of the second protrusion part 31 has the same meaning as a thickness direction of the electronic dimming lens 11. A direction joining the side face part 31c and the side face part 31d is set as a horizontal width direction of the second protrusion part 31. In addition, a direction joining a base end portion of the second protrusion part 31 connected to the outer circumferential face 11c and the end face part 31e will be set as a vertical width direction of the second protrusion part 31.

In the second protrusion part 31, a housing hole 34 for attaching the second terminal member 25 is formed. The housing hole 34 is an approximately circular shaped hole that opens on the front face part 31a. In other words, the front face part 31a is a hole forming face on which the housing hole 34 opens. The housing hole 34 is formed to have a predetermined depth in the thickness direction of the second protrusion part 31. The predetermined depth is a depth at least up to reach of the bus electrode 23. In more detail, in an attachment structure of the second terminal member 25 through the housing hole 34, the first form illustrated in Fig. 8 and the second form illustrated in Fig. 9 can be selected.

As illustrated in Fig. 8, in the first form, the bus electrode 23 having a flat shape is configured to be positioned in a bottom part of the housing hole 34. As illustrated in Fig. 9, in the second form, the housing hole 34 passes through the bus electrode 23 having a flat shape in the thickness direction, and a bottom face of the housing hole 34 is positioned on the rear face part 31b side of the bus electrode 23. In addition, in the second form, the housing hole 34 is set not to pass through up to the rear face part 31b. In other words, in any one of the first form and the second form, the housing hole 34 is configured as a bottomed hole in which only the front face part 31a side is open, and the bottom part is closed.

In the first form illustrated in Fig. 8, a front face of the bus electrode 23 is exposed to the bottom part of the housing hole 34. In other words, the bottom face of the housing hole 34 is configured by the bus electrode 23. In the second form illustrated in Fig. 9, an inner edge part 23a of the through hole of the bus electrode 23 is exposed to the inner circumferential face of the housing hole 34 in a ring shape.

In the second protrusion part 31, one pair of holding grooves 35 that are engagement parts are additionally formed. One holding groove 35 is formed in each of the side face part 31c and the side face part 31d and is a long groove extending in the vertical width direction of the second protrusion part 31. Longitudinal directions of the one pair of holding grooves 35 are approximately parallel to each other.

As one example of manufacturing of an electronic dimming lens 11, after the electronic dimming lens 11 is preliminarily formed including the electrochromic element 21 and the bus electrodes 22 and 23, a housing hole 32 and a housing hole 34 are formed using a drilling tool such as a drill or the like. Similarly, for a holding groove 33 and a holding groove 35, after the electronic dimming lens 11 is preliminarily formed, the holding grooves are formed using a cutting tool.

When the drilling tool completes drilling in a stage in which the bus electrodes 22 and 23 have been reached, a structure (Fig. 8) in which the bus electrodes 22 and 23 are positioned in the bottom faces of the housing holes 32 and 34 is formed. When the drilling tool performs a drilling operation until the drilling tool passes through the bus electrodes 22 and 23, a structure (Fig. 9) in which inner edge parts 22a and 23a of through holes of the bus electrodes 22 and 23 are exposed to the inner circumferential faces of the housing holes 32 and 34 is formed. According to such a manufacturing method, the bus electrodes 22 and 23 can be exposed to bottom parts or inner circumferential faces of the housing holes 32 and 34 simply and reliably.

The first terminal member 24 is a conductive component that is mounted in the housing hole 32 of the first protrusion part 30. The second terminal member 25 is a conductive component that is mounted in the housing hole 34 of the second protrusion part 31. Each of the first terminal member 24 and the second terminal member 25 is formed from metal having high electrical conductivity in at least an outer face (a front face), is molded to match the shape of the corresponding housing hole 32 or 34, and has a shape maintaining property of maintaining a constant shape in a state before being mounted to the housing hole 32 or 34.

In this embodiment, both the first terminal member 24 and the second terminal member 25 have a configuration in which an outer face of a core part made of nickel is covered with gold plating. By using gold having high electrical conductivity as a material of the outer face and using nickel as a material of the inner part, the first terminal member 24 and the second terminal member 25 having superior strength, durability, and conductivity can be acquired while inhibiting a component cost.

The first terminal member 24 has an approximately circular column (cylinder) shape entering the housing hole 32 that is an approximately circular (cylinder) shaped hole and has a front end face 24a and a rear end face 24b each having an approximately circular shape at both ends, and the front end face 24a and the rear end face 24b are connected using an outer circumferential face 24c having a cylinder shape (see Figs. 8 and 9).

The first terminal member 24 is inserted into the inside of the housing hole 32 from the front face part 30a side with the rear end face 24b side as a front side. An outer diameter (a diameter) of the outer circumferential face 24c of the first terminal member 24 is slightly larger than an inner diameter (a diameter) of the housing hole 32, and insertion of the first terminal member 24 into the housing hole 32 is performed with light press-fitting.

A thickness of the first terminal member 24 from the front end face 24a to the rear end face 24b is set to be approximately the same as the depth of the housing hole 32. Thus, when the first terminal member 24 is inserted until the rear end face 24b abuts against the bottom part of the housing hole 32, the front end face 24a that is one end part of the first terminal member 24 becomes approximately flush with the front face part 30a.

In addition, by setting the thickness of the first terminal member 24 to be slightly larger than the depth of the housing hole 32, the front end face 24a may be configured to slightly protrude from the front face part 30a when the first terminal member 24 is inserted into the housing hole 32.

The second terminal member 25 has a structure similar to the first terminal member 24. In other words, the second terminal member 25 has an approximately circular column (cylinder) shape entering the housing hole 34 that is an approximately circular (cylinder) shaped hole and has a front end face 25a and a rear end face 25b each having an approximately circular shape at both ends, and the front end face 25a and the rear end face 25b are connected using an outer circumferential face 25c having a cylinder shape (see Figs. 8 and 9).

The second terminal member 25 is inserted into the inside of the housing hole 34 from the front face part 31a side with the rear end face 25b side as a front side. An outer diameter (a diameter) of the outer circumferential face 25c of the second terminal member 25 is slightly larger than an inner diameter (a diameter) of the housing hole 34, and insertion of the second terminal member 25 into the housing hole 34 is performed with light press-fitting.

A thickness of the second terminal member 25 from the front end face 25a to the rear end face 25b is set to be approximately the same as the depth of the housing hole 34. Thus, when the second terminal member 25 is inserted until the rear end face 25b abuts against the bottom part of the housing hole 34, the front end face 25a that is one end part of the second terminal member 25 becomes approximately flush with the front face part 31a.

In addition, by setting the thickness of the second terminal member 25 to be slightly larger than the depth of the housing hole 34, the front end face 25a may be configured to slightly protrude from the front face part 31a when the second terminal member 25 is inserted into the housing hole 34.

In the first form illustrated in Fig. 8, the first terminal member 24 inserted into the housing hole 32 brings the rear end face 24b that is an end part of a side opposite to the front end face 24a into face contact with the bus electrode 22. In addition, the second terminal member 25 inserted into the housing hole 34 brings the rear end face 25b that is an end part of a side opposite to the front end face 25a into face contact with the bus electrode 23.

In the second form illustrated in Fig. 9, the first terminal member 24 inserted into the housing hole 32 brings the rear end face 24b into contact with the bottom part of the housing hole 32. In the bus electrode 22, the inner edge part 22a of the hole perforated by the housing hole 32 is brought into contact with the outer circumferential face 24c of the first terminal member 24. In addition, the second terminal member 25 inserted into the housing hole 34 brings the rear end face 25b into contact with the bottom part of the housing hole 34. In the bus electrode 23, the inner edge part 23a of the hole perforated by the housing hole 34 is brought into contact with the outer circumferential face 25c of the second terminal member 25.

Since the first terminal member 24 and the second terminal member 25 are press-fitted to the corresponding housing holes 32 and 34, in the second form, the outer circumferential faces 24c and 25c of the terminal members 24 and 25 can be reliably brought into contact with the inner edge parts 22a and 23a of holes of the bus electrodes 22 and 23 without generating any gap.

As described above, the first terminal member 24 is inserted (press-fitted) into the housing hole 32 of the first protrusion part 30 so as to be mounted therein, and the second terminal member 25 is inserted (press-fitted) into the housing hole 34 of the second protrusion part 31 so as to be mounted therein, whereby the conductive member 17 is disposed on the convex face 11a side of the electronic dimming lens 11. The conductive parts 17f of four places disposed in the conductive member 17 are mounted in the electronic dimming lens 11 for the right eye and the electronic dimming lens 11 for the left eye and are brought into contact with the first terminal member 24 and the second terminal member 25.

In more detail, the one pair of arc-shaped parts 17a of the conductive member 17 have shapes disposed along near the upper edges of the convex faces 11a of the electronic dimming lens 11 for the right eye and the electronic dimming lens 11 for the left eye.

On the front face parts 30a of the first protrusion parts 30 of the electronic dimming lens 11 for the right eye and the electronic dimming lens 11 for the left eye, two first connector parts 17d of the conductive member 17 are superimposed. On the front face part 30a of each first protrusion part 30, the front end face 24a of the first terminal member 24 mounted in the housing hole 32 is exposed, and the conductive part 17f of each first connector part 17d faces the front end face 24a and is brought into contact therewith.

On the front face parts 31a of the second protrusion parts 31 of the electronic dimming lens 11 for the right eye and the electronic dimming lens 11 for the left eye, two second connector parts 17e of the conductive member 17 are superimposed. On the front face part 31a of each second protrusion part 31, the front end face 25a of the second terminal member 25 mounted in the housing hole 34 is exposed, and the conductive part 17f of each second connector part 17e faces the front end face 25a and is brought into contact therewith.

Shapes of both the first terminal member 24 and the second terminal member 25 are set in a state before being respectively mounted in the first protrusion part 30 and the second protrusion part 31, and the front end faces 24a and 25a, the rear end faces 24b and 25b, and the outer circumferential faces 24c and 25c can be formed in advance with high accuracy.

For this reason, when the terminal members 24 and 25 are inserted until abutting against the bottom parts of the corresponding housing holes 32 and 34, the front end faces 24a and 25a thereof are exposed at appropriate positions on the front face parts 30a and 31a of the protrusion parts 30 and 31, and position adjustment for the terminal members 24 and 25 that is complicate and requires efforts is unnecessary.

After the terminal members 24 and 25 are mounted in the corresponding housing holes 32 and 34, the front end faces 24a and 25a having high surface accuracy can be reliably brought into contact with the conductive parts 17f of the connector parts 17d and 17e without performing separate processing of the terminal members 24 and 25.

In addition, in the first form illustrated in Fig. 8, the rear end faces 24b and 25b of the terminal members 24 and 25 can be reliably brought into contact with the bus electrodes 22 and 23 with high accuracy. In the second form illustrated in Fig. 9, the outer circumferential faces 24c and 25c of the terminal members 24 and 25 can be reliably brought into contact with the inner edge parts 22a and 23a of the bus electrodes 22 and 23 with high accuracy.

When the mounting of the first terminal member 24 and the second terminal member 25 and the positioning of the conductive member 17 are completed, subsequently, a clip 36 that is a holding member is mounted in the first protrusion part 30 and the second protrusion part 31 of each of the electronic dimming lens 11 for the right eye and the electronic dimming lens 11 for the left eye.

As illustrated in Fig. 4, the clip 36 has a flat upper face part 36a, one pair of leg parts 36b extending from both ends of the upper face part 36a approximately vertically, and one pair of bending parts 36c bending end parts of the leg parts 36b to the inner side (a mutually approaching direction). The one pair of bending parts 36c extends approximately in parallel with the upper face part 36a.

The clip 36 is formed using a material having flexibility and can change intervals of the one pair of leg parts 36b and the one pair of bending parts 36c in accordance with elastic transformation. As the material of the clip 36, metal, a synthetic resin, or the like can be used.

In this embodiment, the shapes and the sizes of the first protrusion part 30 and the second protrusion part 31 are approximately the same, and the clips 36 of a common structure are used. In addition, in a case in which the shapes and the sizes of the first protrusion part 30 and the second protrusion part 31 are different from each other, clips of a shape and a size corresponding to each of the first protrusion part 30 and the second protrusion part 31 are separately prepared.

In a free state (an initial state) in which an external force is not applied to the clip 36, a distance from the upper face part 36a to each bending part 36c in the forward/backward direction is slightly smaller than a distance from the front face part 30a to the holding groove 33 in the thickness direction of the first protrusion part 30 and a distance from the front face part 31a to the holding groove 35 in the thickness direction of the second protrusion part 31.

In addition, in the free state (the initial state) in which an external force is not applied to the clip 36, an interval of the one pair of leg parts 36b is slightly smaller than an interval of the side face part 30c and the side face part 30d in the horizontal width direction of the first protrusion part 30 (an external size of the first protrusion part 30 in the horizontal width direction) and an interval of the side face part 31c and the side face part 31d in the horizontal width direction of the second protrusion part 31 (an external size of the second protrusion part 31 in the horizontal width direction).

The width of each bending part 36c of the clip 36 is approximately the same as the length of each holding groove 33 in the vertical width direction of the first protrusion part 30 and the length of each holding groove 35 in the vertical width direction of the second protrusion part 31.

A mounting operation of the clips 36 for the first protrusion part 30 will be described. When the clips 36 are mounted, by expanding the interval of the one pair of leg parts 36b through elastic transformation, an interval of tip ends of the one pair of bending parts 36c is configured to be wider than the interval of the side face part 30c and the side face part 30d. In this state, the clip 36 is moved in the thickness direction of the first protrusion part 30 such that clip 36 is covered with the first protrusion part 30 from the front face part 30a. Alternatively, after the one pair of bending parts 36c and the one pair of holding grooves 33 are positioned in the thickness direction of the first protrusion part 30, the clip 36 is moved in the vertical width direction of the first protrusion part 30 such that it is slid from the end face part 30e side to the outer circumferential face 11c side.

When the upper face part 36a is attached to the first connector part 17d overlapping the front face part 30a (the front face side on a side opposite to a side on which the conductive part 17f is exposed), in the thickness direction of the first protrusion part 30, the one pair of bending parts 36c reach a position corresponding to the one pair of holding grooves 33. Then, in accordance with a force resolving elastic transformation of the clip 36, the interval of the one pair of leg parts 36b is narrowed, and the one pair of bending parts 36c enter and are engaged with the one pair of holding grooves 33.

In accordance with the upper face part 36a being brought into contact with the front face part 30a (the first connector part 17d on the front face part 30a) and the one pair of bending parts 36c being engaged with the one pair of holding grooves 33, the position of the clip 36 in the thickness direction of the first protrusion part 30 is set. Since the one pair of bending parts 36c are engaged with inner faces (front faces) of the one pair of holding grooves 33, drop-out of the clip 36 to the front side for the first protrusion part 30 is regulated.

At this time, the clip 36 is in a state in which an interval between the upper face part 36a and each bending part 36c is enlarged to be slightly larger than that in the free state, and a force in a restoration direction causing the upper face part 36a and each bending part 36c to approach each other is applied. In accordance with this, the first connector part 17d is pressed to the front face part 30a of the first protrusion part 30, and the conductive part 17f of the first connector part 17d and the front end face 24a of the first terminal member 24 are stably brought into contact with each other. In addition, the position of the clip 36 in the thickness direction of the first protrusion part 30 becomes stable as well.

In addition, by causing the one pair of leg parts 36b to have the side face part 30c and the side face part 30d to be interposed therebetween, the position of the clip 36 in the horizontal width direction of the first protrusion part 30 is set. At this time, the clip 36 is in the state in which the interval of the one pair of leg parts 36b is enlarged to be slightly larger than that of the free state, and a force of in a restoration direction for causing the one pair of leg parts 36b to approach each other is applied. In accordance with this, the position of the clip 36 in the horizontal width direction of the first protrusion part 30 is stabilized.

In addition, in accordance with side end parts of the one pair of bending parts 36c being engaged with end parts of the one pair of holding grooves 33 in the longitudinal direction, the position of the clip 36 in the vertical width direction of the first protrusion part 30 is set.

In the state in which the position in each direction is set as described above, the clip 36 is supported in a state in which it is brought into close contact with the first protrusion part 30. As a result thereof, the first connector part 17d is maintained to be in the state of overlapping the front face part 30a of the first protrusion part 30, and the conductive part 17f of the first connector part 17d and the front end face 24a of the first terminal member 24 are brought into contact with each other in a conductive state.

Subsequently, a mounting operation of clips 36 for the second protrusion part 31 will be described. This mounting operation is similar to the mounting operation of clips 36 for the first protrusion part 30 described above.

While the clip 36 is elastically transformed such that the interval of tip ends of the one pair of bending parts 36c is widened to be larger than the interval between the side face part 31c and the side face part 31d, the clip is caused to approach the second protrusion part 31. A direction of the approach is any one of the thickness direction of the second protrusion part 31 (a direction covering from the front face part 31a) and the vertical width direction of the second protrusion part 31 (a direction of sliding from the end face part 30e side).

When the upper face part 36a is attached to the second connector part 17e overlapping the front face part 31a (the front face side on a side opposite to the side on which the conductive part 17f is exposed), in accordance with the force of the clip 36 for resolving the elastic transformation, the interval of the one pair of leg parts 36b is narrowed, and the one pair of bending parts 36c enter and are engaged with the one pair of holding grooves 35.

In accordance with the upper face part 36a being brought into contact with the front face part 31a (the second connector part 17e on the front face part 31a) and the one pair of bending parts 36c being engaged with the one pair of holding grooves 35, the position of the clip 36 in the thickness direction of the second protrusion part 31 is set. In accordance with engagement of the one pair of bending parts 36c with the one pair of holding grooves 33, drop-out of the clip 36 to the front side for the second protrusion part 31 is regulated, and the position of the clip 36 in the vertical width direction of the second protrusion part 31 is set. In addition, in accordance with the one pair of leg parts 36b having the side face part 31c and the side face part 31d to be interposed therebetween, the position of the clip 36 in the horizontal width direction of the second protrusion part 31 is set.

In this way, when the clip 36 is brought into close contact with the second protrusion part 31, the second connector part 17e is maintained in the state of overlapping the front face part 31a of the second protrusion part 31, and the conductive part 17f of the second connector part 17e and the front end face 25a of the second terminal member 25 are brought into contact with each other in a conductive state.

As an operation of mounting a clip 36 in each of the protrusion parts 30 and 31, by elastically transforming the clip 36, engagement of the one pair of bending parts 36c with one pair of holding grooves 33 and 35 of each of the protrusion parts 30 and 31 is only performed, and thus the operation can be performed in a short time without requiring a complicated operation.

In addition, since a configuration in which the position of the clip 36 is reliably set in all the thickness direction, the horizontal width direction, and the vertical width direction of each of the protrusion parts 30 and 31 is formed, the accuracy and the stability of the position of each of the connector parts 17d and 17e overlapping the front face parts 30a and 31a of each of the protrusion parts 30 and 31 are satisfactory.

For example, as illustrated in Figs. 4 and 5, both the first connector part 17d and the second connector part 17e have one pair of linear portions, which are approximately parallel to each other, according to the interval of the one pair of leg parts 36b of the clip 36 on both sides. In accordance with this one pair of linear portions being interposed between the one pair of leg parts 36b, the positions of the connector parts 17d and 17e are set.

In addition, in the conductive member 17, a part of the extension part 17c and portions other than the conductive part 17f are covered with an outer skin formed from an insulating material, and, in a portion of the conductive member 17 with which the clip 36 is brought into contact, an internal pattern wiring is not exposed. For this reason, even when the clip 36 is formed using a metal material having conductivity, there is no effect on power feeding from the conductive member 17 to the first terminal member 24 and the second terminal member 25.

Figs. 5 and 6 illustrate a lens assembly of a state in which the first terminal member 24 and the second terminal member 25 are mounted in the first protrusion part 30 and the second protrusion part 31 of each of the electronic dimming lens 11 for the left eye and the electronic dimming lens 11 for the right eye, and the conductive member 17 is mounted using the clip 36.

As illustrated in Fig. 1, this lens assembly is held by being pinched from the front and rear sides using the front rim part 12 and the rear rim part 13. In the lens assembly, each of the protrusion parts 30 and 31 and each clip 36 are present at positions covered with the ring-shaped parts 12a and 12b of the front rim part 12 and the ring-shaped parts 13a and 13b of the rear rim part 13. In addition, the one pair of arc-shaped parts 17a of the conductive member 17 are covered with the ring-shaped part 12a and the ring-shaped part 12b of the front rim part 12 from the front side, and the connection part 17b of the conductive member 17 is covered with the bridge 12c of the front rim part 12 from the front side. Furthermore, the extension part 17c of the conductive member 17 is disposed along the lid part 12d of the front rim part 12 and is connected to the dimming control unit 16 inside of the housing space 14c.

Thus, in a state in which the lens assembly is built into the glasses frame 19 of the electronic dimming glasses 10 (particularly, the front rim part 12, the rear rim part 13, and the right temple 14), the entire power feeding structure connected to the first terminal member 24 and the second terminal member 25 of each electronic dimming lens 11 from the dimming control unit 16 through the conductive member 17 is in a state of not being exposed to the external appearance and being covered with each part of the glasses frame 19.

Although not illustrated, on the inner side of the ring-shaped parts 12a and 12b of the front rim part 12 and the ring-shaped parts 13a and 13b of the rear rim part 13, a pinching part pinching the connector parts 17d and 17e from the front and rear sides using the protrusion parts 30 and 31 in the state of holding the lens assembly is disposed. In accordance with pinching using the pinching part, a force maintaining contacts between the conductive parts 17f of the connector parts 17d and 17e and the front end faces 24a and 25a of the terminal members 24 and 25 is given, and, in addition to holding using the clip 36, a further stable connection state can be acquired.

In the electronic dimming glasses 10 of the configuration described above, the first terminal member 24 and the second terminal member 25 of a solid form having no fluidity are inserted into and mounted in the housing holes 32 and 34 formed in each electronic dimming lens 11. In accordance with this, in each electronic dimming lens 11, a terminal part used for connecting the electrochromic element 21 to the conductive member 17 can be provided using a simple operation.

For example, different from this embodiment, in a case in which a terminal part is formed by injecting silver paste, which has fluidity, including silver particles into holes disposed in an electronic dimming lens, the silver paste is injected into fine holes with prevention of scattering to the surrounding and the like taken into account, the operation has a high degree of difficulty. In addition, it is necessary to handle the silver paste in a state having fluidity, and thus temperature management and the like become complicated, and efforts and a cost are taken for building an operation environment. In addition, a time until the silver paste is hardened after injection thereof into holes is required. Furthermore, a terminal surface needs to be finished through post-processing such as polishing and the like such that a high degree of precision of the terminal surface after hardening of the silver paste is secured.

In contrast to this, in the electronic dimming lens 11 and the electronic dimming glasses 10 according to this embodiment, there is only an operation of inserting the first terminal member 24 and the second terminal member 25 having shapes corresponding to respective housing holes 32 and 34 in advance into the housing holes 32 and 34, and thus there is no complication of the operation as in the case of forming terminal parts using a silver paste, and a standby time after insertion is not required.

Since the first terminal member 24 and the second terminal member 25 are respectively inserted into the housing holes 32 and 34 in a press-fitted state, there is no concern for careless drop-out after insertion, and the terminal members can be reliably brought into contact with the bus electrodes 22 and 23 inside of the electronic dimming lens 11 in a conductive state without generating any gap.

In addition, when the first terminal member 24 and the second terminal member 25 are respectively inserted up to innermost sides of the housing holes 32 and 34, the front end faces 24a and 25a are exposed to the front face parts 30a and 31a of the protrusion parts 30 and 31. By preparing the outer face shapes of the first terminal member 24 and the second terminal member 25 with high accuracy in advance before insertion, it can be configured such that processing for preparing surface accuracy becomes unnecessary for the front end faces 24a and 25a and the like after insertion thereof into the housing holes 32 and 34. Thus, only by respectively mounting the first terminal member 24 and the second terminal member 25 in the housing holes 32 and 34, the front end faces 24a and 25a can be configured to function as terminal surfaces used for connecting the front end faces 24a and 25a to the conductive member 17.

In addition, in the first terminal member 24 and the second terminal member 25, there is an advantage of a degree of freedom for selecting a material and a structure being high. In the first terminal member 24 and the second terminal member 25, at least parts (the front end faces 24a and 25a) brought into contact with the conductive part 17f of the conductive member 17, parts (the rear end faces 24b and 25b in the first form illustrated in Fig. 8 and the outer circumferential faces 24c and 25c in the second form illustrated in Fig. 9) brought into contact with the bus electrodes 22 and 23, and parts connecting these may have conductivity.

For this reason, it can be selected such that, out of the first terminal member 24 and the second terminal member 25, outer face parts such as the front end faces 24a and 25a configuring one end part, the rear end faces 24b and 25b configuring the other end part, and the outer circumferential faces 24c and 25c connecting both the end faces are formed using materials having high conductivity, and internal structures disposed on the inner side thereof are formed using other materials.

The first terminal member 24 and the second terminal member 25 of this embodiment are configured on the basis of such selection and have a structure in which an outer face of a core portion made of nickel is covered with gold plating. This structure of the first terminal member 24 and the second terminal member has advantages over terminal parts formed using a silver paste in that it is difficult for the terminal members to be degraded (oxidated and the like), and the durability is improved. In addition, in the first terminal member 24 and the second terminal member 25, by applying gold plating only to the outer faces, a component cost is suppressed, and securement of component strength is realized.

In addition, the configuration of the materials of the first terminal member 24 and the second terminal member 25 of this embodiment is one example, and a modified example in which terminal members are configured using materials and structures different from these is not excluded.

As holding members for holding the conductive member 17, the first terminal member 24, and the second terminal member 25 for the first protrusion part 30 and the second protrusion part 31, the clips 36 are used. The clips 36 have a shape of "Π" surrounding the front face part 30a and the one pair of side face parts 30c and 30d of the first protrusion part 30 and the front face part 31a and the one pair of side face parts 31c and 31d of the second protrusion part 31 and can hold the first connector part 17d and the second connector part 17e of the conductive member 17 with high stability.

In addition, the clips 36 are mounted in the first protrusion part 30 and the second protrusion part 31 by elastically transforming them, and the positions are set by engaging the one pair of bending parts 36c with the one pair of holding grooves 33 and 35 disposed on the outer faces of the protrusion parts 30 and 31, and thus the clips can be simply mounted without requiring a complicated operation sequence and complicated position adjustment. The clip 36 is mounted in a closely-contact state using a restoration force from elastic deformation for each of the protrusion parts 30 and 31 and gives forces tightly pressing the front end face 24a of the first terminal member 24 and the front end face 25a of the second terminal member 25 for the first connector part 17d and the second connector part 17e, and thus each conductive part 17f of each of the connector parts 17d and 17e and each of the front end faces 24a and 25a can be brought into stable contact with each other with high accuracy.

Although the first terminal member 24 and the second terminal member 25 are respectively inserted into the housing holes 32 and 34 in a press-fitted state, by further mounting the clip 36, an opening portion of each of the housing holes 32 and 34 is covered. As a result, drop-out of the first terminal member 24 and the second terminal member 25 respectively from the housing holes 32 and 34 can be reliably prevented using the clip 36.

In addition, by mounting the clips 36, in a stage before each electronic dimming lens 11 is built into the glasses frame 19 (the front rim part 12 and the rear rim part 13), a state in which the conductive member 17, the first terminal member 24, and the second terminal member 25 are held at appropriate positions for each electronic dimming lens 11 is maintained. In other words, the lens assembly (Fig. 6) acquired by combining each electronic dimming lens 11 and the conductive member 17 is finished before it is built into the glasses frame 19. In accordance with this, a complicate operation in which, while the electronic dimming lens 11 and the conductive member 17, which have a separated relation, are pressed with being positioned, they are built into the glasses frame 19 becomes unnecessary, and the operability at the time of assembling the electronic dimming glasses 10 is improved.

In addition, for giving a holding force for maintaining contact of terminal parts (each conductive part 17f of each of the connector parts 17d and 17e and each of the front end faces 24a and 25a of the terminal members 24 and 25) of the lens assembly, three forms may be selected.

In a first form for giving a holding force to the terminal part, a holding force according to the clip 36 and a pinching force according to the front rim part 12 and the rear rim part 13 are used together. First, in the lens assembly state (Fig. 6) in which the conductive member 17 is held by mounting the clips 36 in each electronic dimming lens 11, in accordance with a force of the clip 36 to be restored from elastic transformation, the connector parts 17d and 17e are respectively pressed to the front face parts 30a and 31a in the thickness direction of each of the protrusion parts 30 and 31. In addition, when the lens assembly is mounted between the front rim part 12 and the rear rim part 13, the pinching parts disposed inside of the ring-shaped parts 12a and 12b and the ring-shaped parts 13a and 13b pinch each clip 36, each of the connector parts 17d and 17e, and each of the protrusion parts 30 and 31 from the front and rear sides, and a pressing force from above each clip 36 is given.

In this first form, since holding according to the clips 36 and holding according to the front rim part 12 and the rear rim part 13 are used together, there is an advantage that the reliability of connection of the terminal parts is high. For example, even in a case in which one holding force of any one of these two holding parts is insufficient due to precision error and the like of a component, a likelihood of being able to maintain contact of the terminal part using the holding force of the other parts becomes high.

In a second form for giving a holding force to the terminal part, a holding force according to the clips 36 is mainly used. By setting the shape and the size relation of each clip 36 such that each clip 36 is brought into tight contact with each of the front face parts 30a and 31a with a strong force, by only using the holding force of the clip 36, contact between each conductive part 17f and each of the front end faces 24a and 25a can be maintained.

In this second form, in the front rim part 12 and the rear rim part 13, a pinching part for pinching each of the protrusion parts 30 and 31 and each of the connector parts 17d and 17e is not required, and, even if the pinching part is disposed, precise accuracy management becomes unnecessary. As a result, the degree of freedom in designing the glasses frame 19 is improved. For example, different from this embodiment, the second form can be applied also to a glasses frame of a type that is not divided into front and rear members such as the front rim part 12 and the rear rim part 13.

In addition, the holding of the conductive member 17 and each of the terminal members 24 and 25 using the clip 36 that is a small component has advantages over holding using the front rim part 12 and the rear rim part 13 that are large components in that it is difficult to have an influence of precision error of each component, and precision management can be easily performed.

A third form in which a holding force toward a terminal part is given, a pinching force according to the front rim part 12 and the rear rim part 13 is mainly used. In each clip 36, in the state of the lens assembly (Fig. 6), light holding of a degree for which the position of the conductive member 17 does not deviate is performed, but a pressing force for reliably bringing each conductive part 17f into contact with each of the front end faces 24a and 25a in a conductive state is set not to be given. When the lens assembly is pinched from the front and rear sides by the front rim part 12 and the rear rim part 13, pinching parts disposed inside of the ring-shaped parts 12a and 12b and the ring-shaped parts 13a and 13b hold each clip 36, each of the protrusion parts 30 and 31, and each of the connector parts 17d and 17e while giving pinching forces of a predetermined level or more thereto, and each conductive part 17f is reliably brought into contact with each of the front end faces 24a and 25a.

In this third form, in each clip 36, a function of maintaining conduction between each conductive part 17f and each of the front end faces 24a and 25a can be omitted. For this reason, compared to the first and second forms, precision and positional conditions of each clip 36 for each of the protrusion parts 30 and 31 are relieved. In the state of the lens assembly (Fig. 6), the position of the conductive member 17 is set, and the conductive member 17 does not need to be additionally maintained, which is similar to the first and second forms, and thus an advantage that the operability of building the electronic dimming lens 11 into the glasses frame 19 is superior is acquired.

As described above, in each of the three forms in which a holding force is given to the terminal part, there are advantages. In the electronic dimming glasses 10 of this embodiment, although the first form is applied, the second form or the third form can be employed as well.

Both the insertion of the first terminal member 24 and the second terminal member 25 into the housing holes 32 and 34 and mounting of the clip 36 in each of the protrusion parts 30 and 31 have a structure in which irreversible fixing means such as bonding or the like is not essential, and thus the operability at the time of disassembling is superior as well.

For example, from the finished state of the electronic dimming glasses 10, by detaching the lens assembly from the front rim part 12 and the rear rim part 13 and detaching the clips 36 from the lens assembly except for fixing using the screws 18, the conductive member 17 can be detached from the electronic dimming lens 11 in a non-destructive manner.

In addition, as is necessary, by applying a force of a predetermined level or more to the first terminal member 24 and the second terminal member 25 in a pull-out direction, the first terminal member 24 and the second terminal member 25 can be detached from the housing holes 32 and 34 as well.

Thus, this structure is a structure for which not only assembly of the electronic dimming glasses 10 but also maintenance after assembly and the like can be easily performed.

In addition, in a case in which disassembly after assembly is not premised, the first terminal member 24 and the second terminal member 25 can be fixed to the housing holes 32 and 34 through bonding, or the clip 36 can be fixed to each of the protrusion parts 30 and 31 through bonding.

Fig. 10 illustrates an electronic dimming lens 40 that is a modified example acquired by changing the attachment structure of terminal members. The electronic dimming lens 40 has a convex face 40a that is a front face, a concave face 40b that is a rear face, and an outer circumferential face 40c.

Inside of a lens that is an optical element configuring the electronic dimming lens 40, an electrochromic element (not illustrated) that is an electronic element for dimming is disposed, and a bus electrode 41 used for a positive electrode connected to a first electrode layer of the electrochromic element and a bus electrode 42 used for a negative electrode connected to a second electrode layer of the electrochromic element are disposed inside of a lens peripheral edge. The electrochromic element configuring the electronic dimming lens 40 has a configuration and an arrangement that are similar to the electrochromic element 21 of the electronic dimming lens 11 described above.

Different from the electronic dimming lens 11 described above, the electronic dimming lens 40 does not have a protrusion part protruding to the outer side of an outer circumferential face 40c. On the convex face 40a that is a lens center side of the outer circumferential face 40c, a housing hole 43 and a housing hole 44 are open. The housing hole 43 is disposed at a position connected to the bus electrode 41, and the housing hole 44 is disposed at a position connected to the bus electrode 42. A first terminal member 45 is molded to match the shape of the housing hole 43, and a second terminal member 46 is molded to match the shape of the housing hole 44.

The first terminal member 45 is inserted into the housing hole 43 in a press-fitted state, and the inserted first terminal member 45 is brought into contact with the bus electrode 41. The second terminal member 46 is inserted into the housing hole 44 in a press-fitted state, and the inserted second terminal member 46 is brought into contact with the bus electrode 42. In this state, front end faces of the first terminal member 45 and the second terminal member 46 become approximately in plane with the convex face 40a. Alternatively, the front end faces of the first terminal member 45 and the second terminal member 46 slightly protrudes from the convex face 40a to the front side.

Each of the housing holes 43 and 44 and each of the terminal members 45 and 46 have shapes and functions similar to those of each of the housing holes 32 and 34 and each of the terminal members 24 and 25 of the electronic dimming lens 11 described above except for differences in installation positions. In addition, each of the terminal members 45 and 46 is formed using the same material as that of each of the terminal members 24 and 25 described above.

In more detail, a first form (a structure similar to that illustrated in Fig. 8) in which the bus electrodes 41 and 42 are respectively positioned on the bottom faces of the housing holes 43 and 44, and rear end faces of the terminal members 45 and 46 are respectively brought into contact with the bus electrodes 41 and 42 or a second form (a structure similar to that illustrated in Fig. 9) in which housing holes 43 and 44 respectively pass through the bus electrodes 41 and 42, and outer circumferential faces of the terminal members 45 and 46 are brought into contact with the bus electrodes 41 and 42 is configured.

Glasses frame (not illustrated) in which the electronic dimming lens 40 is mounted has a ring-shaped part holding a peripheral edge portion of the electronic dimming lens 40. A holding area according to the ring-shaped part of the glasses frame includes exposed portions (opening portions of the housing holes 43 and 44) of the front end faces of the first terminal member 45 and the second terminal member 46 in the convex face 40a. One pair of connector parts of a conductive member (not illustrated) disposed on the inner side of the ring-shaped part of the glasses frame are brought into contact with the front end face of the first terminal member 45 and the front end face of the second terminal member 46. In accordance with this, a path for power feeding from the dimming control unit (not illustrated) disposed inside of the glasses frame to the each of the terminal members 45 and 46 of the electronic dimming lens 40 through the conductive member is finished.

As in the electronic dimming lens 40 described above, a configuration in which a lens shape not having a protrusion part protruding to the outer side of the outer circumferential face 40c is formed, and the housing holes 43 and 44 are disposed on the convex face 40a may be employed. The lens peripheral edge part in which the housing holes 43 and 44 are formed is covered with the ring-shaped part of the glasses frame in the finished part of the electronic dimming glasses and thus is appropriate as a position at which the terminal members 45 and 46 are disposed. In addition, the first terminal member 45 and the second terminal member 46 are respectively inserted into corresponding housing holes 43 and 44 in a press-fitted state and are held without being dropped out in the finished state of the electronic dimming lens 40, and thus the operability at the time of mounting the electronic dimming lens 40 in the glasses frame is superior as well.

The electronic dimming lens 11 described above and the electronic dimming lens 40 are common in a point that the housing holes 32 and 34 and the housing holes 43 and 44 open on the front face side except for the presence/absence of the protrusion part. Figs. 11 to 13 illustrate an electronic dimming lens 50 that is another modified example acquired by changing the attachment structure of the terminal members. Fig. 14 illustrates a glasses frame 60 in which the electronic dimming lens 50 is mounted.

The electronic dimming lens 50 has an electrochromic element 52 (see Fig. 12), a bus electrode 53 used for a positive electrode connected to a first electrode layer of the electrochromic element 52, and a bus electrode 54 used for a negative electrode connected to a second electrode layer of the electrochromic element 52 inside of a lens 51. Similar to the electronic dimming lens 40 illustrated in Fig. 10, the electronic dimming lens 50 is formed to have a simple outer circumferential shape having no protrusion part protruding toward the outer diameter side.

In the electronic dimming lens 50, not in a convex face 50a of the front face side and a concave face 50b of the rear face side but in an outer circumferential face 50c facing the outer diameter side, a housing hole 55 used for mounting the first terminal member 57 and a housing hole 56 used for mounting the second terminal member 58 are formed. Each of the housing holes 55 and 56 is a bottomed hole that opens on the outer circumferential face 50c and is formed toward the center side of the electronic dimming lens 50. Each of the housing holes 55 and 56 is an approximately circular hole, and the first terminal member 57 and the second terminal member 58 have an approximately circular column (cylinder) shape. Configurations and materials of the first terminal member 57 and the second terminal member 58 are similar to those of the first terminal member 24 and the second terminal member 25 described above. The first terminal member 57 is molded to match the shape of the housing hole 55, and the second terminal member 58 is molded to match the shape of the housing hole 56.

As illustrated in Fig. 13, in the bus electrodes 53 and 54, concave parts 53b and 54b having a shape "Π" entering the inner diameter side from outer frame parts 53a and 54a facing the outer circumferential face 50c side of the electronic dimming lens 50 are disposed. The housing holes 55 and 56 are disposed to respectively overlap the concave parts 53b and 54b, and positions of bottom parts of the housing holes 55 and 56 and those of bottom parts of the concave parts 53b and 54b coincide with each other. Edge portions of the shapes "Π" of the concave parts 53b and 54b are respectively exposed to the inner faces (bottom faces; parts of the inner circumferential faces) of the housing holes 55 and 56.

As one example of manufacturing of the electronic dimming lens 50, from a state in which the bus electrodes 53 and 54 do not respectively have the concave parts 53b and 54b, housing holes 55 and 56 are formed using a punching tool such as a drill or the like. As a result of the formation of the housing holes 55 and 56, parts of the bus electrodes 53 and 54 are removed, and concave parts 53b and 54b are formed. According to such a manufacturing method, by simply causing the positions of the housing holes 55 and 56 and the positions of the concave parts 53b and 54b to coincide with each other, edge portions of the concave parts 53b and 54b can be reliably exposed to the inner sides of the housing holes 55 and 56.

The first terminal member 57 is inserted into the inside of the housing hole 55 from an inner end face 57b side as a front side. An outer diameter (a diameter) of the outer circumferential face 57c of the first terminal member 57 is slightly larger than an inner diameter (a diameter) of the housing hole 55, and insertion of the first terminal member 57 into the housing hole 55 is performed with light press-fitting.

A thickness of the first terminal member 57 from an outer end face 57a to the inner end face 57b is set to be approximately the same as the depth of the housing hole 55. Thus, when the first terminal member is inserted until the inner end face 57b abuts against the bottom part of the housing hole 55, the outer end face 57a of the first terminal member 57 becomes approximately flush with the outer circumferential face 50c of the electronic dimming lens 50. In addition, by setting the thickness of the first terminal member 57 to be slightly larger than the depth of the housing hole 55, when the first terminal member 57 is inserted into the housing hole 55, the outer end face 57a may be configured to slightly protrude from the outer circumferential face 50c.

When the first terminal member 57 is inserted into the housing hole 55, a part of the first terminal member 57 enters and is fitted to the concave part 53b of the bus electrode 53, and a part of the inner end face 57b and a part of the outer circumferential face 57c (a part of the first terminal member 57 entering the concave part 53b) are brought into contact with the inner edge portion of the concave part 53b. In accordance with this, the first terminal member 57 and the bus electrode 53 come into a conductive state. Since the first terminal member 57 is press-fitted to the housing hole 55, the first terminal member 57 and the bus electrode 53 can be reliably conductive without generating any gap therebetween.

The second terminal member 58 is inserted into the inside of the housing hole 56 from an inner end face 58b side as a front side. An outer diameter (a diameter) of the outer circumferential face 58c of the second terminal member 58 is slightly larger than an inner diameter (a diameter) of the housing hole 56, and insertion of the second terminal member 58 into the housing hole 56 is performed as light press-fitting.

A thickness of the second terminal member 58 from an outer end face 58a to the inner end face 58b is set to be approximately the same as the depth of the housing hole 56. Thus, when the second terminal member 58 is inserted until the inner end face 58b abuts against the bottom part of the housing hole 56, the outer end face 58a of the second terminal member 58 becomes approximately flush with the outer circumferential face 50c of the electronic dimming lens 50. In addition, by setting the thickness of the second terminal member 58 to be slightly larger than the depth of the housing hole 56, when the second terminal member 58 is inserted into the housing hole 56, the outer end face 58a may be configured to slightly protrude from the outer circumferential face 50c.

When the second terminal member 58 is inserted into the housing hole 56, a part of the second terminal member 58 enters and is fitted to the concave part 54b of the bus electrode 54, and a part of the inner end face 58b and a part of the outer circumferential face 58c (a part of the second terminal member 58 entering the concave part 54b) are brought into contact with the inner edge portion of the concave part 54b. In accordance with this, the second terminal member 58 and the bus electrode 54 come into a conductive state. Since the second terminal member 58 is press-fitted to the housing hole 56, the second terminal member 58 and the bus electrode 54 can be reliably conductive without generating any gap therebetween.

In addition, also in the case of a structure in which the outer frame parts 53a and 54a of the bus electrodes 53 and 54 are positioned in bottom parts of the housing holes 55 and 56 without disposing the concave parts 53b and 54b in the bus electrodes 53 and 54, the terminal members 57 and 58 (the inner end faces 57b and 58b) and the bus electrodes 53 and 54 can be brought into contact with each other. However, in the case of this configuration, there are problems in that contact areas are limited to short linear areas along the outer frame parts 53a and 54a, and it is difficult to manage position precision of the terminal members 57 and 58 for the outer frame parts 53a and 54a. In contrast to this, according to a structure in which the terminal members 57 and 58 respectively enter the concave parts 53b and 54b, such problems are solved, and the bus electrodes 53 and 54 and the terminal members 57 and 58 can be stably brought into contact with each other.

Since the first terminal member 57 and the second terminal member 58 are respectively inserted into the housing holes 55 and 56 in a press-fitted state, there is no concern for careless drop-out after insertion, and the terminal members can be reliably brought into contact with the bus electrodes 53 and 54 inside of the electronic dimming lens 50 in a conductive state. Similar to the electronic dimming lenses 11 and 40 described above, the terminal structure according to the first terminal member 57 and the second terminal member 58 have various advantages over an existing terminal structure in which terminal parts are formed by injecting silver paste.

By mounting the electronic dimming lens 50 for the left eye and the electronic dimming lens 50 for the right eye in the glasses frame 60 illustrated in Fig. 14, electronic dimming glasses are configured.

The glasses frame 60 has a rim part 61 having one pair of left and right ring-shaped parts 61a and 61b and a left temple 62 and a right temple 63 that are mounted to be able to rotate to left and right sides of the rim part 61. Different from the glasses frame 19 (Fig. 1) described above, in the glasses frame 60, an integrated structure in which the rim part 61 is not divided into front and rear parts is formed. On the inner circumferential sides of the ring-shaped parts 61a and 61b, a lens holding part 61c that holds each electronic dimming lens 50 by fitting the peripheral edge part of the electronic dimming lens 50 therein is formed. In addition, in Fig. 13, although the inner circumferential structure of the ring-shaped part 61a for the left eye is illustrated, the lens holding part 61c is similarly formed also on the inner circumferential side of the ring-shaped part 61b for the right eye.

Inside of the left temple 62 of the glasses frame 60, the dimming control unit 64 is disposed. A conductive member 65 electrically connecting the first terminal member 57 and the second terminal member 58 mounted in the electronic dimming lens 50 and a power supply of the dimming control unit 64 is disposed inside of the glasses frame 60. The conductive member 65 is configured using a flexible printed board or the like.

The conductive member 65 extends along the ring-shaped parts 61a and 61b of the rim part 61 and exposes a first connector part 65a and a second connector part 65b on the inner circumferential face of the lens holding part 61c. In Fig. 13, although the connector parts 65a and 65b of the ring-shaped part 61a are illustrated, similar connector parts 65a and 65b are disposed also in the ring-shaped part 61b.

In addition, an arrangement structure of the conductive member 65 for the rim part 61 may be any one of the following two forms. A first form is a structure in which, after the conductive member 65 is disposed (embedded) in the form of being embedded inside of the ring-shaped parts 61a and 61b, only the connector parts 65a and 65b are exposed through openings of the inner circumferential side of the rim part 61. A second form is a structure in which, after the conductive member 65 is disposed along the inner circumferential faces of the ring-shaped parts 61a and 61b, the connector parts 65a and 65b are exposed as parts in which a part of the external skin, having an insulating property, of the conductive member 65 is removed.

When the electronic dimming lens 50 for the left eye and the electronic dimming lens 50 for the right eye are respectively mounted in the ring-shaped parts 61a and 61b of the rim part 61, the outer end face 57a of the first terminal member 57 of each electronic dimming lens 50 is brought into contact with the first connector part 65a, and the outer end face 58a of the second terminal member 58 is brought into contact with the second connector part 65b.

Each electronic dimming lens 50 is lens-shape processed such that a contour shape fitted to the lens holding part 61c of the glasses frame 60 without generating rattling is formed. For this reason, when each electronic dimming lens 50 is mounted for the lens holding part 61c, the outer end faces 57a and 58a of the terminal members 57 and 58 are reliably brought into contact with corresponding connector parts 65a and 65b. Then, a path for power feeding from the dimming control unit 64 to each of the terminal members 57 and 58 of the electronic dimming lens 50 through the conductive member 65 is finished.

In the electronic dimming lens 50, the first terminal member 57 and the second terminal member 58 are exposed on the outer circumferential face 50c. By using the structure in which the outer circumferential face 50c is fitted to the lens holding part 61c of the glasses frame 60, the terminal members 57 and 58 are respectively brought into contact with the first connector part 65a and the second connector part 65b of the conductive member 65. By using this configuration, contact between the first terminal member 57 and the second terminal member 58 and the conductive member 65 can be performed without using a pinching structure in the thickness direction of the electronic dimming lens 50, the glasses frame 60 having a simple structure in which the rim part 61 is not divided into front and rear parts can be employed.

In addition, since the electronic dimming lens 50 is mounted in a state in which the conductive member 65 is supported on the glasses frame 60, without using a holding member such as the clip 36 described above, the terminal members 57 and 58 can be connected to the conductive member 65. Since the terminal members 57 and 58 are respectively inserted into the housing holes 55 and 56 in a press-fitted state, the terminal members are not dropped out from the electronic dimming lens 50 even when a holding member is not used.

As above, although the description has been presented on the basis of the illustrated embodiment, the present invention is not limited to the foregoing embodiment but can be variously modified and changed in a range not departing from the gist of the invention.

For example, in the illustrated electronic dimming lenses 11 and 40, although the housing holes 32 and 34 and the housing holes 43 and 44 that open on the front face (the convex faces 11a and 40a) side are disposed, a configuration in which the first terminal members 24 and 45 and the second terminal members 25 and 46 are inserted into housing holes that open on the rear face (the concave faces 11b and 40b) side may be employed.

Alternatively, a configuration in which holes housing one of the first terminal members 24 and 45 and the second terminal members 25 and 46 open on the front face side of the electronic dimming lenses 11 and 40, and holes housing the other of the first terminal members 24 and 45 and the second terminal members 25 and 46 open on the rear face side of the electronic dimming lenses 11 and 40 can be employed.

In other words, in a case in which holes that are open in the forward/backward directions of the electronic dimming lens are disposed, the holes may be configured to be open on at least one of the front face and the rear face, and the opening direction of the holes can be appropriately selected in accordance with peripheral structures such as the conductive members, the glasses frame, and the like.

In addition, the arrangement of the conductive members can be changed. In the electronic dimming lens 11 described above, the front end faces 24a and 25a of the first terminal member 24 and the second terminal member 25 are exposed to the front face (the convex face 11a) side, and all the one pair of arc-shaped parts 17a, the first connector part 17d, and the second connector part 17e of the conductive member 17 are disposed on the front face (the convex face 11a) side of the electronic dimming lens 11. This configuration has an advantage that the shape of the conductive member 17 can be configured to be simple along only one face of the electronic dimming lens 11. However, the arrangement of the conductive member 17 in which the first connector part 17d and the second connector part 17e are superimposed on one side of the front face (the convex face 11a) and the rear face (the concave face 11b) of the electronic dimming lens 11, and the arc-shaped part 17a is superimposed on the other side can be employed.

Generally, in an electronic dimming lens, an electrode having a flat shape along the spread of a lens is frequently used. The connection structures of electrodes and terminal members illustrated as the embodiment and the modified examples are appropriate for the conditions of such an electronic dimming lens.

For example, as in the housing holes 32 and 34 of the electronic dimming lens 11, in the case of holes formed in the thickness direction of a lens, the holes are formed vertically or with an intersection angle close to a vertical direction with respect to the bus electrodes 22 and 23 of a flat shape having a thickness in the thickness direction of the lens. For this reason, a structure (Fig. 8) in which the rear end faces 24b and 25b of the terminal members 24 and 25 face and are brought into contact with the front face side of the bus electrodes 22 and 23 and a structure (Fig. 9) in which the outer circumferential faces 24c and 25c of the terminal members 24 and 25 are surrounded and are brought into contact with the inner edge parts 22a and 23a of through holes of the bus electrodes 22 and 23 are appropriate.

As in the housing holes 55 and 56 of the electronic dimming lens 50, in the case of holes formed in the diameter direction of a lens (a spread direction of the lens), the holes are formed horizontally or with an intersection angle close to a horizontal direction with respect to the bus electrodes 53 and 54 of a flat shape having a thickness in the thickness direction of the lens. For this reason, a structure (Fig. 13) in which the inner end faces 57b and 58b and the outer circumferential faces 57c and 57c of the terminal members 57 and 58 enter and are brought into contact with the concave parts 53b disposed in outer frame parts of the bus electrodes 53 and 54 is appropriate.

However, depending on the arrangement and the shape of electrodes of the electronic dimming lens, there is a likelihood of a connection structure of terminal members and electrodes being different from that illustrated in the drawing, and thus such another connection structure is not excluded.

For example, in a part of a bus electrode, a bending part extending in the thickness direction of the lens may be disposed. In such a case, a terminal member that is inserted from a hole that opens on the front face or the rear face of the electronic dimming lens can be connected to the bending part of the bus electrode in the structure (a structure in which the terminal member enters a concave part of a bus electrode) as illustrated in Fig. 13. In addition, a terminal member inserted from a hole that opens on the outer circumferential face of the electronic dimming lens can be connected to the bending part of the bus electrode in a structure (a structure in which the end face of the terminal member faces the bus electrode on a plane) as illustrated in Fig. 8 or a structure (a structure in which the outer circumferential face of the terminal member is surrounded by an inner edge portion of a through hole of the bus electrode) as illustrated in Fig. 9.

In all the illustrated electronic dimming lenses 11, 40, and 50, although a connection target of each terminal member is a bus electrode that is a metal electrode, an application to an electronic dimming lens of a type not including a bus electrode can be performed. In such a case, each terminal member is connected to a first electrode layer (a transparent electrode layer) configuring an electrochromic element and a second electrode layer (a transparent electrode layer). For example, in the peripheral edge portion of the electrochromic element, when seen from the front/rear sides, a first area in which the first electrode layer is present alone and a second area in which the second electrode layer is present alone are provided. Then, by individually forming a hole passing through the first area and a hole passing through the second area, a structure in which a terminal member used for a positive electrode is connected only to the first electrode layer, and a terminal member used for a negative electrode is connected only to the second electrode layer can be realized. In this case, as necessary, each hole is formed by causing it to pass through a substrate configuring the electrochromic element.

In the illustrated electronic dimming lens 11, although the electronic dimming lens 11 is configured by disposing the electrochromic element 21 inside (in the middle in the thickness direction) the lens 20, an application to a type in which the electrochromic element 21 is stacked on the outer face of the lens 20 can be performed. For example, the electronic dimming lens 11 may be configured by pre-forming the electrochromic element 21 into a shape corresponding to the convex face 11a and bonding the electrochromic element 21 to the lens 20 such that it is superimposed on the convex face 11a. In such a configuration, when the hole for inserting the terminal member is configured to open on the front face side, a hole is formed in a substrate configuring the electrochromic element 21, and there are also cases in which no hole is formed in the part of the lens 20.

In other words, there are a configuration in which holes for insertion of terminal members are formed only in a lens that is an optical element, a configuration in which holes for insertion of terminal members are formed only in an electronic element for dimming, and a configuration in which holes for insertion of terminal members are formed in both a lens and an electronic element. In accordance with conditions such as a type of electrodes to which terminal members are connected, arrangement of electrodes, and the like, such a configuration is appropriately selected.

In the illustrated electronic dimming lens 11, in a state in which the first terminal member 24 and the second terminal member 25 are respectively inserted into the housing holes 32 and 34, the front end faces 24a and 25a become approximately flush with the front face parts 30a and 31a. Alternatively, the front end faces 24a and 25a slightly protrude from the front face parts 30a and 31a. According to such a configuration, when the first connector part 17d and the second connector part 17e of the conductive member 17 are superimposed on the first protrusion part 30 and the second protrusion part 31, each conductive part 17f can be reliably brought into contact with each of the front end faces 24a and 25a.

In the illustrated electronic dimming lens 50, in a state in which the first terminal member 57 and the second terminal member 58 are respectively inserted into the housing holes 55 and 56, the outer end faces 57a and 58a become approximately flush with the outer circumferential face 50c. Alternatively, the outer end faces 57a and 58a slightly protrude from the outer circumferential face 50c. According to such a configuration, when the electronic dimming lens 50 is mounted in the lens holding part 61c of the glasses frame 60, the connector parts 65a and 65b can be respectively brought into reliable contact with the outer end faces 57a and 58a.

However, a modified example in which the front end faces 24a and 25a are disposed at positions entering the inside of the housing holes 32 and 34 from the front face parts 30a and 31a and a modified example in which the outer end faces 57a and 58a are disposed at positions entering the inside of the housing holes 55 and 56 from the outer circumferential face 50c are not excluded.

For example, in the conductive member 17, by employing a structure in which each conductive part 17f protrudes from a face that is a reference of the first connector part 17d and the second connector part 17e, each conductive part 17f can be caused to enter the inside of each of the housing holes 32 and 34 and be brought into contact with each of the front end faces 24a and 25a.

In addition, in the conductive member 65, by forming the first connector part 65a and the second connector part 65b to have a protrusion shape entering the opening diameter of each of the housing holes 55 and 56 and causing them to protrude from the inner circumferential face of the lens holding part 61c, the connector parts 65a and 65b can be caused to enter the inside of the housing holes 55 and 56 and be brought into contact with the outer end faces 57a and 58a.

In the illustrated embodiment, the terminal members (24, 25, 45, 46, 57, and 58) are inserted into corresponding housing holes (32, 34, 43, 44, 55, and 56) in a press-fitted state (insertion is performed using press-fitting). In accordance with this, although the advantages described above are acquired, the terminal members can be also disposed inside of the housing holes not through press-fitting but through insertion. For example, in a case in which terminal members inserted into housing holes are fixed using an adhesive agent or a case in which terminal members inserted into housing holes are held using a holding member such as the clip 36, at the time of insertion into the housing holes, press-fitting may not be performed. Alternatively, on an outer circumferential face of a terminal member and an inner circumferential face of a housing hole, by providing a screw shape such as a screw, an engagement shape such as serration, a locking shape for allowing movement in an insertion direction and regulating movement in a detaching direction, or the like, insertion accompanying screwing, engaging, or locking can be performed. In other words, the present invention may be a configuration or a manufacturing method in which terminal members molded in advance to match the shape of housing holes are disposed inside of the housing holes regardless whether or not press-fitting is accompanied and are caused to function as terminals for a dimming electronic element.

In the illustrated embodiment, although the electrochromic element is applied as an electronic element configuring an electronic dimming lens, the present invention can be applied also to an electronic dimming lens and electronic dimming glasses having an electronic element other than the electrochromic element. For example, an electrophoresis element, a liquid crystal element, and the like are common to the electrochromic element in that optical properties are changed by supplying electrical energy. Thus, by applying the technology described above to a terminal structure of an electronic dimming lens using an electrophoresis element or a liquid crystal element as an electronic element, similar effects can be acquired. In addition, "dimming" according to the present invention represents the entire optical effects applied by such various electronic elements on an optical element and is not limited to changes in light transmittance (a light transmittance rate) and colors.

In the illustrated embodiment, although the lens that is an optical element is made of a resin, an application to a lens made of glass may be performed.

### [Industrial Applicability]

According to the present invention, reliability, durability, and productivity of terminals connected to electrodes of an electronic element for dimming can be improved, and the degree of usefulness in optical products such as electronic dimming glasses and the like is high.

This application is based on Japanese Patent Application No. 2021-169006 applied on Oct. 14, 2021. All the content thereof is incorporated herein.

## Claims

1. An electronic dimming lens acquired by combining an electronic element for dimming and a lens, the electronic dimming lens comprising:
holes that open on an outer face of the electronic dimming lens and are connected to electrodes for a positive electrode and a negative electrode in the electronic element; and
terminal members that are molded to match shapes of the holes and are inserted into the holes,
wherein the terminal members are electrically connected to the electrodes inside of the holes and have one end parts exposed through openings of the holes.

2. The electronic dimming lens according to claim 1, wherein the terminal members are disposed inside of the holes in a press-fitted state.

3. The electronic dimming lens according to claim 1 or 2, wherein the electrodes are positioned on bottom faces of the holes, and end parts of the terminal members that are on a side opposite to the one end parts are brought into contact with the electrodes.

4. The electronic dimming lens according to claim 1 or 2, wherein the holes pass through the electrodes, and outer circumferential faces of the terminal members are brought into contact with the electrodes.

5. The electronic dimming lens according to claim 1 or 2,
wherein the holes overlap concave parts disposed in outer frame parts of the electrodes, and
wherein entering parts of the terminal members for the concave parts are brought into contact with the electrodes.

6. The electronic dimming lens according to claim 1 or 2, wherein the terminal members have structures in which outer faces of core portions made of nickel are covered with gold plating.

7. The electronic dimming lens according to claim 1 or 2, wherein the holes open on at least one of a front face and a rear face of the electronic dimming lens.

8. The electronic dimming lens according to claim 1 or 2, wherein the holes open on an outer circumferential face of the electronic dimming lens.

9. The electronic dimming lens according to claim 1 or 2, comprising:
a protrusion part that protrudes from an outer circumferential face of the lens to an outer side and forming the holes;
a conductive member for power feeding that is disposed to overlap the protrusion part and is brought into contact with the terminal members; and
a holding member that is mounted in the protrusion part from above the conductive member and holds the conductive member and the terminal members with respect to the protrusion part.

10. The electronic dimming lens according to claim 9,
wherein the protrusion part has engagement portions on one pair of side faces adjacent to a hole formation face where the holes open, and
wherein the holding member has a shape surrounding the hole formation face and the one pair of side faces and is engaged with the engagement portions.

11. Electronic dimming glasses comprising:
the electronic dimming lens according to claim 9; and
a glasses frame in which the electronic dimming lens is mounted and which covers the protrusion part, the conductive member, and the holding member,
wherein the conductive member is connected to a dimming control unit built into the glasses frame, and power is fed from the dimming control unit to the electronic element through the conductive member and the terminal member.

12. Electronic dimming glasses comprising:
the electronic dimming lens according to claim 8; and
a glasses frame supporting a conductive member connected to a dimming control unit in which a connector part of the conductive member is exposed on an inner circumferential face of a ring-shaped part holding the electronic dimming lens,
wherein, in a state in which the electronic dimming lens is held in the ring-shaped part, the terminal member is brought into contact with the connector part, and power is fed from the dimming control unit to the electronic element through the conductive member and the terminal member.

13. A manufacturing method for an electronic dimming lens acquired by combining an electronic element for dimming and a lens, the manufacturing method comprising:
forming holes that open on an outer face of the electronic dimming lens and are connected to electrodes for a positive electrode and a negative electrode in the electronic element;
molding terminal members with shapes matching shapes of the holes;
electrically connecting the molded terminal members to the electrodes by inserting the terminal members into the holes from an opening side and exposing one end parts of the inserted terminal members through openings of the holes.

14. The manufacturing method for the electronic dimming lens according to claim 13, wherein insertion of the terminal members into the holes is performed by press-fitting.

15. The manufacturing method for an electronic dimming lens according to claim 13 or 14,
wherein the holes are formed in a protrusion part protruding from an outer circumferential face of the lens to an outer side,
wherein, after the terminal members are inserted into the holes, a conductive member for power feeding is brought into contact with the one end parts of the terminal members positioned inside of the holes by overlapping the conductive member with the protrusion part, and
wherein the conductive member and the terminal members are held with respect to the protrusion part by mounting a holding member in the protrusion part from above the conductive member.

16. A manufacturing method for electronic dimming glasses having the electronic dimming lens manufactured by the manufacturing method according to claim 15, the manufacturing method comprising:
mounting the electronic dimming lens in a state in which the terminal members, the conductive member, and the holding member are assembled in a glasses frame; and
connecting the conductive member to a dimming control unit disposed inside of the glasses frame.

17. The manufacturing method for an electronic dimming lens according to claim 13 or 14,
wherein the holes are formed to open on an outer circumferential face of the lens, and
wherein the terminal members are inserted into the holes, and the one end parts are exposed on an outer circumferential side of the lens.

18. A manufacturing method for electronic dimming glasses having the electronic dimming lens manufactured by the manufacturing method according to claim 17, the manufacturing method comprising:
disposing a conductive member for power feeding along an inner circumferential face of a ring-shaped part of a glasses frame holding the electronic dimming lens; and
bringing the conductive member into contact with the one end parts of the terminal members positioned inside of the holes by mounting the electronic dimming lens in the glasses frame.
